# EUROPEAN PATENT APPLICATION

(11) **EP 4 759 217 A1**
(43) Date of publication of application: **17.06.2026**
(21) Application number: 24850774.1
(22) Date of filing: 18.07.2024
(51) Int. Cl.: A47L 11/40, A47L 11/24, A47L 11/28

(54) **CLEANING ROBOT AND CONTROL METHOD AND DEVICE THEREFOR, AND STORAGE MEDIUM**

(30) Priority: 08.08.2023 CN 202310994877
(71) Applicant: Qfeeltech (Beijing) Co., Ltd., Beijing 100191 (CN)
(72) Inventor: LIU, Zhanglin, Beijing 100191 (CN); ZHANG, Wei, Beijing 100191 (CN)
(74) Representative: Carpmaels & Ransford LLP
(86) International application number: PCT/CN2024/106148
(87) International publication number: WO 2025/031124

(57) **Abstract**

The present disclosure relates to a cleaning robot and a control method and device therefor, and a storage medium. The method comprises: when a startup condition is met, controlling a cleaning robot to operate in a specific mode, wherein controlling the cleaning robot to operate in the specific mode comprises: a starting step: determining that the cleaning robot uses a first preset position as a starting point of a first stage, and controlling the cleaning robot to be located at the starting point; a first execution step: controlling the cleaning robot to operate along a first path; and a second execution step: controlling the cleaning robot to operate along a second path, wherein the first stage comprises the first execution step and the second execution step; the second path is symmetrical to the first path; the first path is an S-shaped curve; a first initial direction of the first path is perpendicular to an initial operation direction of the cleaning robot; and the second path is an S-shaped curve using an end point of the first path as a starting point and using a starting point of the first path as an end point. Therefore, the cleaning robot can more specifically and effectively clean dirty areas.

## Description

### TECHNICAL FIELD

The present disclosure relates to the field of smart home technologies, and in particular, to a cleaning robot, a control method and device thereof, and a storage medium.

### BACKGROUND

In a related art, a cleaning robot runs on a work surface of a work area, and cleans the entire work surface to the same extent. However, the related art cannot perform more targetedly cleaning on the dirty area.

In another related art, a cleaning robot runs on a work surface of a work area, and performs a certain mode of deep cleaning on a dirty area in the work surface. However, the existing deep cleaning mode usually has a limited degree of cleaning the dirty area, and it is difficult to achieve the cleaning effect desired by the customer. Therefore, the related art has the problem of insufficient degree of cleaning the dirty area.

Therefore, the dirty area cannot be effectively cleaned in the related art.

### SUMMARY

In view of this, the present disclosure provides a cleaning robot, a control method and device thereof, and a storage medium, which can clean a dirty area more targetedly and effectively.

According to a first aspect of the present disclosure, there is provided a control method for a cleaning robot, wherein the cleaning robot is configured to clean a work area, and the control method comprises: controlling the cleaning robot to run in a specific mode when a starting condition is satisfied, wherein controlling the cleaning robot to run in the specific mode comprises: an initial step, determining that the cleaning robot takes a first preset position as a starting point of a first stage, controlling the cleaning robot to be located at the starting point of the first stage, and turning a running direction of the cleaning robot to a first initial direction; a first execution step, controlling the cleaning robot to run along a first path; a second execution step, controlling the cleaning robot to run along a second path, the first stage comprises the first execution step and the second execution step; wherein the second path is symmetrical with the first path; the first path is an S-shaped curve, and the first initial direction of the first path is perpendicular to an initial running direction of the cleaning robot; and the second path is an S-shaped curve with an ending point of the first path as a starting point and the starting point of the first path as an ending point.

According to a second aspect of the present disclosure, there is provided a control method for a cleaning robot, wherein the cleaning robot is configured to clean a work area, and the control method comprises: controlling the cleaning robot to run in a specific mode when a starting condition is satisfied, wherein controlling the cleaning robot to run in the specific mode comprises: an initial step, determining that the cleaning robot takes a first preset position as a starting point of a first stage, controlling the cleaning robot to be located at the starting point of the first stage, and turning a running direction of the cleaning robot to a first initial direction; a first execution step, controlling the cleaning robot to run along a first combined path; a second execution step, controlling the cleaning robot to run along a second combined path, the first stage comprises the first execution step and the second execution step; wherein the first combined path is a path formed by connecting M S-shaped first paths end to end; the first initial direction of the first path is perpendicular to an initial running direction of the cleaning robot; M is a positive integer greater than 1; an ending point of the first combined path is an ending point of an M-th first path; the second combined path is symmetrical with the first combined path; the second combined path is a path formed by connecting M S-shaped second paths end to end; the starting point of the second combined path is the starting point of the first second path and is the same as the ending point of the first combined path, and the ending point of the second combined path is the ending point of the M-th second path and is also the same as the starting point of the first combined path.

According to a third aspect of the present disclosure, there is provided a control device for a cleaning robot, wherein the cleaning robot is configured to clean a work area, and the control device comprises: a control part configured to control the cleaning robot to run in a specific mode when a starting condition is satisfied, wherein the control part is configured to execute the following steps: an initial step, determining that the cleaning robot takes a first preset position as a starting point of a first stage, controlling the cleaning robot to be located at the starting point of the first stage, and turning a running direction of the cleaning robot to a first initial direction; a first execution step, controlling the cleaning robot to run along a first path; a second execution step, controlling the cleaning robot to run along a second path, the first stage comprises the first execution step and the second execution step; wherein the second path is symmetrical with the first path, the first path is an S-shaped curve, and the first initial direction of the first path is perpendicular to an initial running direction of the cleaning robot; and the second path is an S-shaped curve with an ending point of the first path as a starting point and a starting point of the first path as an ending point.

According to a fourth aspect of the present disclosure, there is provided a control device for a cleaning robot, wherein the cleaning robot is configured to clean a work area, and the control device comprises: a control part configured to control the cleaning robot to run in a specific mode when a starting condition is satisfied, wherein the control part is configured to execute the following steps: an initial step, determining that the cleaning robot takes a first preset position as a starting point of a first stage, controlling the cleaning robot to be located at the starting point of the first stage, and turning a running direction of the cleaning robot to a first initial direction; a first execution step, controlling the cleaning robot to run along a first combined path; a second execution step, controlling the cleaning robot to run along a second combined path, the first stage comprises the first execution step and the second execution step; wherein the first combined path is a path formed by connecting M S-shaped first paths end to end; the first initial direction of the first path is perpendicular to an initial running direction of the cleaning robot; M is a positive integer greater than 1; an ending point of the first combined path is an ending point of an M-th first path; the second combined path is symmetrical with the first combined path; the second combined path is a path formed by connecting M S-shaped second paths end to end; the starting point of the second combined path is the starting point of the first second path and is the same as the ending point of the first combined path, and the ending point of the second combined path is the ending point of the M-th second path and is also the same as the starting point of the first combined path.

According to a fifth aspect of the present disclosure, there is provided a control device for a cleaning robot, comprising: a processor; and a memory for storing processor-executable instructions, wherein the processor is configured to implement the control method according to the first aspect or the second aspect when executing the instructions stored in the memory.

According to a sixth aspect of the present disclosure, there is provided a cleaning robot, comprising: a moving assembly configured to move the cleaning robot over a work surface in a work area; and the control device according to the third aspect, the fourth aspect, or the fifth aspect.

According to a seventh aspect of the present disclosure, there is provided a non-volatile computer-readable storage medium having computer program instructions stored thereon, wherein the computer program instructions, when executed by a processor, implement the control method according to the first aspect or the second aspect.

According to the present disclosure, during the running of the cleaning robot, when the starting condition is satisfied, the cleaning robot runs in a specific mode (double S mode), that is, the cleaning robot first runs along the S-shaped first path from the starting point of the first stage to the ending point, and then runs along the second path symmetrical with the previous first path from the ending point to the starting point of the original first stage, it can be seen that the cleaning robot runs to form a double S-shaped curve (the S-shaped curve corresponding to the first path and the S-shaped curve corresponding to the second path partially overlap with each other). Therefore, compared with the problem in the prior art that the same cleaning on the entire work surface results in the inability to perform more targetedly cleaning on the dirty area and the insufficient cleaning degree of the dirty area, the cleaning robot of the present disclosure can clean the dirty position at least twice continuously, so that the dirty area can be cleaned more targetedly and more effectively.

Other features and aspects of the present disclosure will become apparent from the following detailed description of exemplary embodiments with reference to the accompanying drawings.

### BRIEF DESCRIPTION OF THE DRAWINGS

The accompanying drawings, which are incorporated in and constitute a part of this specification, illustrate exemplary embodiments, features, and aspects of the present disclosure and, together with the description, serve to explain the principles of the disclosure.
FIG. 1a is a flowchart of a control method of a cleaning robot according to an exemplary embodiment.
FIG. 1b is a schematic diagram of a cleaning robot running in a specific mode according to an exemplary embodiment.
FIG. 1c is a detailed schematic diagram of the cleaning robot running in a specific mode according to an exemplary embodiment.
FIG. 1d is a detailed schematic diagram of the cleaning robot running in a specific mode according to an exemplary embodiment.
FIG. 1e is an enlarged schematic diagram of a first path and a second path in a specific mode in FIG. 1b ③.
FIG. 1f is a schematic diagram of one implementation of a first path and a second path in a specific mode.
FIG. 2 is a flowchart of a control method of a cleaning robot according to an exemplary embodiment.
FIG. 3a is a flowchart of a control method of a cleaning robot according to an exemplary embodiment.
FIG. 3b is a schematic diagram of a cleaning robot running in a specific mode according to an exemplary embodiment.
FIG. 3c is an enlarged schematic diagram of a third path in a specific mode according to FIG. 3b ④.
FIG. 3d is an enlarged schematic diagram of a fourth path in a specific mode according to FIG. 3b ⑤.
FIG. 3e is a detailed schematic diagram of a third path in a specific mode according to another implementation in FIG. 3b ④.
FIG. 4a is a flowchart of a control method of a cleaning robot according to an exemplary embodiment.
FIG. 4b is a schematic diagram of a cleaning robot running in a specific mode according to an exemplary embodiment.
FIG. 4c is a schematic diagram of a cleaning robot running in a specific mode according to an exemplary embodiment.
FIG. 5 is a flowchart of a control method of a cleaning robot according to an exemplary embodiment.
FIG. 6a is a flowchart of a control method of a cleaning robot according to an exemplary embodiment.
FIG. 6b is a schematic diagram of a cleaning robot running in a specific mode according to an exemplary embodiment.
FIG. 7 is a block diagram of a control device of a cleaning robot according to an exemplary embodiment.

### DETAILED DESCRIPTION

Various exemplary embodiments, features and aspects of the present disclosure will be described in detail below with reference to the accompanying drawings. The same reference numbers in the drawings indicate functionally the same or similar elements. While the various aspects of the embodiments are presented in drawings, the drawings are not necessarily drawn to scale unless specifically indicated.

The word "exemplary" is used exclusively herein to mean "serving as an example, embodiment, or illustration." Any embodiment described herein as "exemplary" is not necessarily to be construed as preferred or advantageous over other embodiments.

In addition, in order to better illustrate the present disclosure, numerous specific details are given in the following specific embodiments. It will be understood by those skilled in the art that the present disclosure may be practiced without some of the specific details. In some instances, methods, means, elements, and circuits well known to those skilled in the art are not described in detail, so as to highlight the subject matter of the present disclosure.

### Implementation 1:

The exemplary embodiment provides a control method, which is executed by a cleaning robot, and the cleaning robot may be, for example, a device for autonomously moving in a space of an actual work area to clean impurities (such as dust, sewage, etc.) on a ground or a window surface so as to automatically clean the space, wherein the cleaning robot comprises, but is not limited to, an intelligent sweeper, an intelligent mopping robot, an intelligent window mopping robot, an intelligent sweeping and mopping integrated machine, etc.

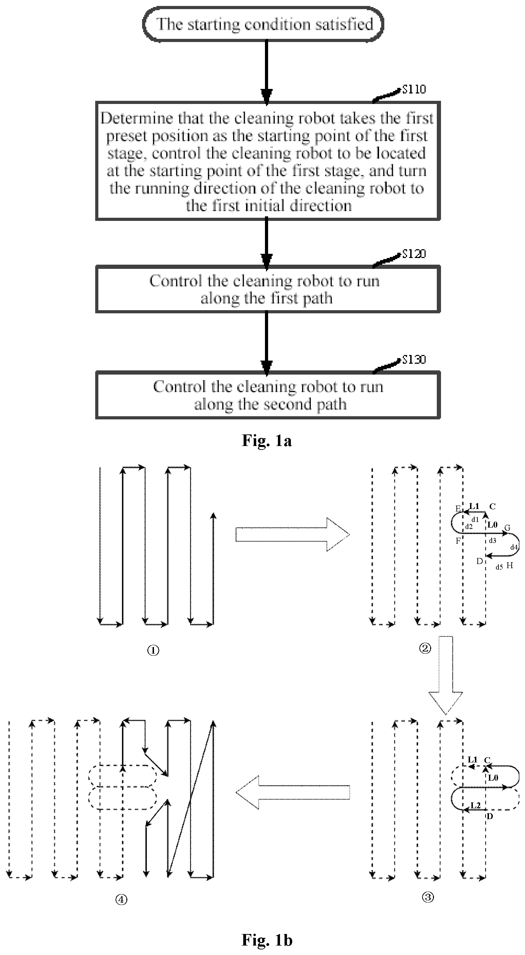

Referring to FIG. 1a, the control method may comprise: controlling the cleaning robot to run in a specific mode when a starting condition is satisfied.

In the embodiment, during the running of the cleaning robot in the work area, whether the starting condition is satisfied may be detected in real time. In a case where it is detected that the starting condition is satisfied, the cleaning robot may run in a specific mode. Exemplarily, the starting condition may be related to the degree of dirtiness or the dirty area.

In a possible implementation, the cleaning robot is provided with a dirtiness detection sensor for detecting the degree of dirtiness, such as an infrared emitter-receiver pair sensor (infrared emitter-receiver pair for short) or a camera. During the running of the cleaning robot in the work area, the dirtiness detection sensor starts working to acquire the degree of dirtiness of the current work surface (such as the ground); if the degree of dirtiness of the current work surface satisfies the starting condition, the cleaning robot runs in a specific mode. In some embodiments, the starting condition is related to the degree of dirtiness, for example, the starting condition comprises detecting that the degree of dirtiness of the current work surface meets a preset dirtiness condition. Exemplarily, if the dirtiness detection sensor is an infrared emitter-receiver pair, the degree of dirtiness of the current work surface may be determined according to the intensity value of the reflected light received by the light receiver of the infrared emitter-receiver pair; if the intensity value of the reflected light received by the light receiver is lower than the set threshold, it is determined that the degree of dirtiness of the current work surface meets the preset dirtiness condition, and in this case, the starting condition is satisfied, and the cleaning robot runs in the specific mode. If the dirtiness detection sensor is a camera, an image or a video of the current work surface may be captured by the camera: a dirtiness feature (such as a size of a dirtiness particle and a dirtiness transparency) in the image or the video is extracted by using an image recognition algorithm, a dirtiness type is recognized according to the dirtiness feature, and if the dirtiness feature meets a condition of a pre-stored dirtiness feature or the recognized dirtiness type belongs to a pre-stored dirtiness type, it is determined that a degree of dirtiness of the current work surface meets a preset dirtiness condition, and in this case, the starting condition is satisfied, and the cleaning robot runs in a specific mode. The above examples are merely illustrative of the type and detection principle of the dirtiness detection sensor, and should not be construed as limiting the dirtiness detection sensor and the preset dirtiness condition described in the present disclosure.

It should be understood that the above description of the starting condition is only exemplary, and in some embodiments, the starting condition of the present disclosure may further comprise other conditions, for example, the starting condition may further comprise detecting an area specified by the user in the work area that needs to be deeply cleaned, or receiving an instruction sent by the user to enter a specific mode, or starting the cleaning robot (that is, directly running in the specific mode when the cleaning robot is started). The present disclosure does not limit the starting condition.

Exemplarily, during the running of the cleaning robot in the work area (i.e., during the cleaning process), the cleaning robot may or may not be in the dirty area. However, regardless of whether the cleaning robot is in the dirty area, the cleaning robot can run in a specific mode when the starting condition is satisfied.

In the embodiment, controlling the cleaning robot to run in the specific mode comprises the following steps:
In step S110 (initial step), it is determined that the cleaning robot takes the first preset position as the starting point of the first stage, and the cleaning robot is controlled to be located at the starting point of the first stage, and the running direction of the cleaning robot is turned to the first initial direction. In other words, the first preset position may be used as a starting point of the first path or the first combined path to be run in the specific mode. For the convenience of subsequent description, the first execution step S120 and the second execution step S130 after the initial step S110 are collectively referred to as the first stage in the present disclosure. Therefore, the first preset position is the starting point of the first stage.

In a possible implementation, the first preset position is a position of the dirty area in the work area, and in this case, the initial step S110 may specifically comprise: determining that the cleaning robot takes a position of the dirty area (which may be a point on a boundary of the dirty area, or a geometric center point of the dirty area, or a closest point at which the cleaning robot reaches the dirty area, or another position in the dirty area) as a starting point of the first stage; and controlling the cleaning robot to run from a first position to the position of the dirty area, where the first position is an initial position at which the cleaning robot is located when running in a specific mode.

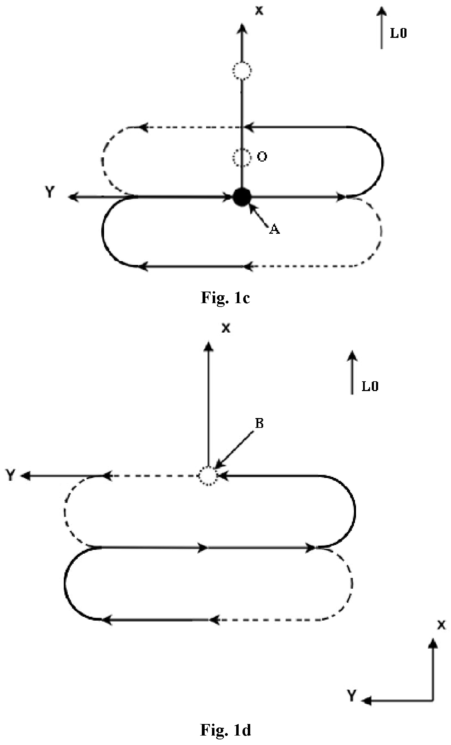

For ease of description, the embodiment is described below with reference to FIG. 1c. FIG. 1c is a detailed schematic diagram of the cleaning robot running in a specific mode. As shown in FIG. 1c, when the starting condition is satisfied, the cleaning robot enters the specific mode at a position O, and the position O is an initial position at which the cleaning robot is located when the cleaning robot starts to run in the specific mode, that is, the first position; and when the cleaning robot moves from the current first position O to a position of a specific dirty area (that is, the first preset position), for example, the position A in FIG. 1c, the position A of the dirty area is used as the starting point of the first stage in the specific mode. This enables the subsequent specific mode to be started from the dirty area, so as to perform more targetedly cleaning on the dirty area and improve the cleaning efficiency.

In a possible implementation in practice, the first preset position is set to be an initial position at which the cleaning robot is located when the cleaning robot starts to run in the specific mode, and in this case, the initial step S 110 may specifically comprise: determining the initial position at which the cleaning robot is located when the cleaning robot starts to run in the specific mode as a starting point of a first stage to be run subsequently, and in this case, the cleaning robot is necessarily located at the starting point of the first stage.

In the embodiment, for ease of description, the embodiment is described below with reference to FIG. 1d. FIG. 1d is a detailed schematic diagram of the cleaning robot running in a specific mode. As shown in FIG. 1d, when the starting condition is satisfied, the cleaning robot runs in a specific mode at a position B, and the position B is an initial position at which the cleaning robot is located when the cleaning robot starts to run in the specific mode; assuming that the position B is also the first preset position, that is, the starting point of the first stage in the specific mode (also the starting point of the first path or the first combined path), the cleaning robot will start the subsequent first execution step S120 from the starting point, that is, the position B. Compared with the embodiment of FIG. 1c, the cleaning robot of the present embodiment does not need to first move from the initial position to a specific dirty position and then run the subsequent first execution step S120, but directly runs the subsequent first execution step S120 from the current initial position after the starting condition is satisfied, so that the cleaning robot does not need to calculate to which dirty position the cleaning robot needs to move, which saves the calculation time and the time to run to the dirty position.

After the initial step S110 is completed, steps S120 and S130 of the specific mode are sequentially executed.

In the embodiment, in step S120 (first execution step), the cleaning robot is controlled to run along the first path. For ease of description, the embodiment is described below with reference to FIG. 1b. FIG. 1b is a schematic diagram of the cleaning robot running in a specific mode. The first path is an S-shaped curve (as shown by the S-shaped solid line path in the upper right corner of FIG. 1b ②), and the first initial direction of the first path is perpendicular to the initial running direction of the cleaning robot. It should be understood that if the cleaning robot runs in a specific mode when being started, the initial running direction of the cleaning robot is the current running direction of the cleaning robot. If the cleaning robot switches from another mode to a specific mode, the initial running direction of the cleaning robot is a running direction before the cleaning robot switches to the specific mode (that is, a running direction when the cleaning robot just switches to the specific mode). In practice, for example, the cleaning robot may rotate 90° in situ in the counterclockwise or clockwise direction (or rotate 270°, 450° in situ in the counterclockwise or clockwise direction) from the initial running direction to the first initial direction of the first path. Exemplarily, the cleaning robot runs in the normal mode of the boustrophedon route in FIG. 1b ①, satisfies the starting condition when running to point C as shown in FIG. 1b ②, switches from the normal mode to the specific mode, prepares to run along the first path with the point C as the starting point of the first stage, and turns the running direction of the cleaning robot to the first initial direction, in this case, the direction L0 represented by the dashed arrow connected to point C in the upper right corner of FIG. 1b ② is the initial running direction of the cleaning robot (i.e., the running direction before switching to the specific mode, also the running direction when just switching to the specific mode); the solid arrow L1 connected to and perpendicular to the dashed arrow of the direction L0 is the first initial direction of the first path (i.e., the S-shaped curve). After switching from the normal mode to the specific mode, the cleaning robot rotates 90° in situ in the counterclockwise direction (or 270° in situ in the clockwise direction) from the initial running direction L0 of the starting point C to the first initial direction L1 of the first path. Then it runs to the point D along the first path in the first initial direction L1 of the first path.

In step S130 (second execution step), the cleaning robot is controlled to run along the second path. The second path is symmetrical to the first path, and the second path is an S-shaped curve with an ending point of the first path as a starting point and a starting point of the first path as an ending point.

Since the second path is symmetrical with the first path, and the second path is an S-shaped curve with the ending point of the first path as the starting point and the starting point of the first path as the ending point, the second path can be easily determined on the premise that the first path is determined.

Exemplarily, an S-shaped dashed path in an upper right corner of FIG. 1b ③ is a first path, a starting point of the first path is a point C, and an ending point of the first path is a point D; the first path runs along the dotted line in the S-shape from the starting point C to the ending point D toward the direction L1 (the leftward direction in FIG. 1b ③). Whereas the second path is an S-shaped solid line path symmetrical to the first path, and in FIG. 1b ③, a starting point of the second path is a point D (that is, an ending point of the first path), and an ending point of the second path is a point C (that is, a starting point of the first path); and the second path runs along the solid line for the S-shaped path from the starting point D toward the direction L2 (a leftward direction in FIG. 1b ③) and returns to the ending point C.

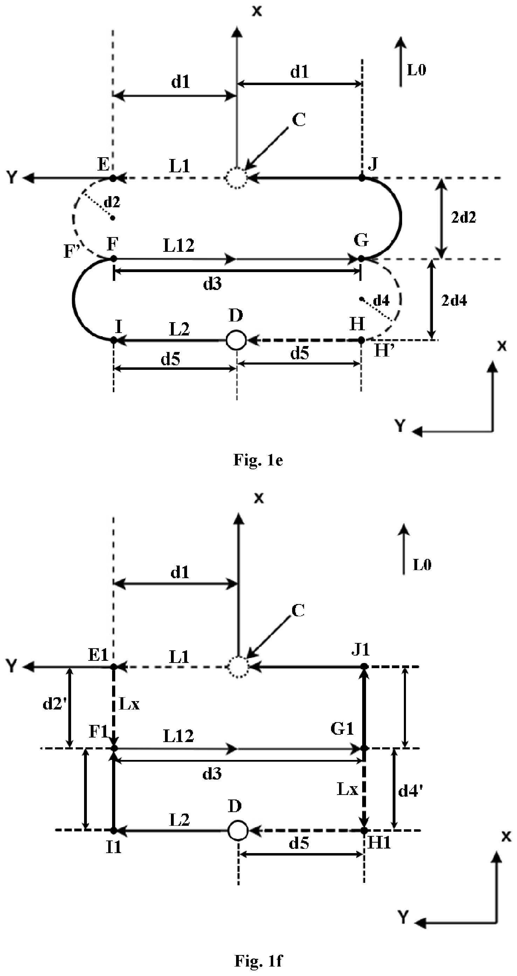

It should be noted that the "S-shaped curve" used in the present disclosure is to facilitate the description of the shape of the running path of the cleaning robot such as the first path and the second path, and is an approximation of the shape of the running path, and is not limited to the strict shape of the letter S. Specifically, the "S-shaped curve" in the present disclosure comprises not only the positive S-shaped curve of the dashed line on the right side in FIG. 1b ③, but also the solid S-shaped curve on the right side in FIG. 1b ③; it comprises not only the forward and reverse S-shaped curves from C to D and from D to C in FIG. 1e that are arcs at turns, but also the boustrophedon running route from C to D and from D to C in FIG. 1f that are sharp right angles at turns.

For ease of description, a first implementation of the embodiment is described below with reference to FIG. 1e, and FIG. 1e is an enlarged schematic diagram of a first path and a second path (a double S-shaped path on the right side) in a specific mode in FIG. 1b ③. After the first preset position is determined in the initial step S110 (thus the starting point of the first stage is determined) and the cleaning robot is located at the starting point of the first stage (such as point C in FIG. 1b ② and FIG. 1e), the first execution step S120 is executed to control the cleaning robot to run along the first path. The first path may specifically comprise: 1) running along a straight line toward a first initial direction for a first predetermined distance; exemplarily, as shown in FIG. 1e, the cleaning robot runs a first predetermined distance d1 to point E along a straight line toward a first initial direction L1 with the point C as a starting point of the first stage. 2) Running along a first arc whose radius is a second predetermined distance toward the first rotation direction, the running distance is the half circumference of the first circle where the first arc is located; exemplarily, as shown in FIG. 1e, the cleaning robot runs along the arc segment of the first arc EF whose radius is the second predetermined distance d2 toward the first rotation direction (counterclockwise in FIG. 1e) with the point E as a starting point; the running distance is the distance of the half circumference of the first circle where the first arc is located, that is, the distance of the arc segment EF in FIG. 1e, runs to the point F, and in this case, the running direction L12 of the cleaning robot is opposite to the first initial direction L1 and perpendicular to the direction L0 (horizontally rightward direction in FIG. 1b ② and FIG. 1e). 3) Running along a straight line toward the direction L12 for a third predetermined distance; exemplarily, as shown in FIG. 1e, the cleaning robot runs to a point G along the straight line toward the direction L12 for a distance d3 with the point F as a starting point. 4) Running along a second arc whose radius is a fourth predetermined distance toward the second rotation direction, the running distance is a half circumference of a second circle where the second arc is located; exemplarily, as shown in FIG. 1e, the cleaning robot runs along the arc segment of the second arc GH whose radius is the fourth predetermined distance d4 toward the second rotation direction (clockwise in FIG. 1e) with the point G as a starting point; the running distance is the distance of the half circumference of the circle where the second arc is located, that is, the distance of the arc segment GH in FIG. 1e, runs to point H, and in this case, the running direction L2 of the cleaning robot is the same as the first initial direction L1. 5) Running along a straight line toward the first initial direction for the fifth predetermined distance to the ending point of the first path; exemplarily, as shown in FIG. 1e, the cleaning robot runs to the ending point D of the first path along the straight line toward the direction L2 (also the first initial direction L1) for the distance d5 with the point H as a starting point. Therefore, as shown in FIG. 1e, the first path is an S-shaped curve from the starting point C to the ending point D through each point of the points E, F, G, and H.

The first to fifth predetermined distances are not limited in the present disclosure, and may be set according to requirements. In some embodiments, the first predetermined distance d1 may be set with reference to a width L (also referred to as a work width) of the roller brush of the cleaning robot, for example, may be a multiple of half of the work width L (referred to as a half-width for short) (for example, 1.5L or 2L, corresponding to 3 half-widths and 4 half-widths, respectively). In an implementation, the third predetermined distance d3 is twice the first predetermined distance d1, and in another implementation, the third predetermined distance d3 is equal to the first predetermined distance d1. In some embodiments, the fourth predetermined distance d4 is equal to the second predetermined distance d2, in this case, the first arc is the same as the second arc, and the radius of the first circle is the same as the radius of the second circle; while in some embodiments, the second arc may be different from the first arc, and the first arc and the second arc may not be half circumference, in this case, the cleaning robot is not required to run a semicircle along the arc, and even if the cleaning robot does not run to the semicircle or exceeds the semicircle, the cleaning robot may still continue to run the path of the corresponding step by adjusting the direction of the cleaning robot to the direction L1, the direction L12 or the direction L2 corresponding to the corresponding step (the direction L12 is opposite to the direction L1, and the direction L2 is the same as the direction L1). In some embodiments, the fifth predetermined distance d5 is equal to the first predetermined distance d1; while in some embodiments, the fifth predetermined distance d5 may not be equal to the first predetermined distance d1.

It should be understood that in the second execution step, the second path may be formed according to the principle of symmetry with the first path, and the cleaning robot may be controlled to run along the second path. Exemplarily, as shown in FIG. 1b ③ or FIG. 1e, the second path is an S-shaped curve from a starting point D to a point C along a solid line, and the point C is both an ending point of the second path and a starting point of the first stage. Therefore, as shown by the double S-shaped dashed path in the middle of FIG. 1b ④, the cleaning robot runs a first path of an S-shaped curve (such as the S-shaped solid path in the upper right corner of FIG. 1b ②) and then runs a second path of the S-shaped curve (such as the S-shaped solid path in the upper right corner of FIG. 1b ③) in the actual work area, for convenience of description, the two S-shaped curves may be referred to as a double S-shaped curve, and the specific mode may also be referred to as a double S mode, as can be seen from FIG. 1b ③ to ④ and FIG. 1e, the double S-shaped curve forms an Arabic numeral-8 shapes.

A specific implementation of the second path in the first implementation of the embodiment is described below with reference to FIG. 1e. The second path is symmetrical to the first path, and the second path is an S-shaped curve with an ending point of the first path as a starting point and a starting point of the first path as an ending point. As shown in FIG. 1e, when the cleaning robot completes the first execution step S120-after controlling the cleaning robot to run along the first path and reaching the point D, the cleaning robot is controlled to run along the second path. The second path may specifically comprise: 1) running for a fifth predetermined distance d5 to point I from point D toward the first initial direction L2, where point I and point H are mirror-symmetrical with a CD connecting line as a symmetry axis. 2) Running along the arc segment of the second arc IF whose radius is the fourth predetermined distance d4 toward the second rotation direction (clockwise in FIG. 1e) with the point I as the starting point; the running distance is the half circumference of the circle where the second arc is located, that is, the distance of the arc segment IF in FIG. 1e, and runs to the point F; wherein the arc segment of the second arc FI and the arc segment of the second arc GH are mirror-symmetrical with the CD connecting line as the symmetry axis. 3) Running to a point G along the straight line toward the direction L12 for a distance d3 with the point F as a starting point, where the point G and the point F are mirror-symmetrical with a CD connecting line as a symmetry axis. 4) Running along the arc segment of the first arc GJ whose radius is the second predetermined distance d2 toward the first rotation direction (counterclockwise in FIG. 1e) with the point G as the starting point; the running distance is the distance of the half circumference of the circle where the first arc is located, that is, the arc segment GJ in FIG. 1e, and runs to the point J; wherein the arc segment of the first arc JG and the arc segment of the first arc EF are mirror-symmetrical with the CD connecting line as the symmetry axis. 5) Running along a straight line toward a first initial direction L1 for a first predetermined distance d1 to a point C with a point J as a starting point; wherein the point J and a point E are mirror-symmetrical with a CD connecting line as a symmetry axis. The CD connecting line herein may be a symmetry axis of symmetry between the second path and the first path, and a point and a line that are determined and unique and belong to the second path may be found based on a point and a line on the first path by using the CD connecting line as the symmetry axis, so that the second path symmetrical to the first path is also determined and unique. Of course, there may also be other symmetry axes and symmetry manners, for example, the second path and the first path are mirror-symmetrical with the FG connecting line as the symmetry axis in FIG. 1e, in this case, the point C and the point D are mirror-symmetrical with the FG connecting line as the symmetry axis, the point E and the point I are mirror-symmetrical with the FG connecting line as the symmetry axis, the point J and the point H are mirror-symmetrical with the FG connecting line as the symmetry axis, the arc segment EF and the arc segment IF are mirror-symmetrical with the FG connecting line as the symmetry axis, the arc segment JG and the arc segment HG are mirror-symmetrical with the FG connecting line as the symmetry axis, and the line segment EJ and the line segment IH are mirror-symmetrical with the FG connecting line as the symmetry axis. In the above implementation, it can be learned that the starting point D of the second path is the ending point of the first path, and the ending point C of the second path is the starting point of the first path.

After the above second execution step is completed, that is, the first stage is completed, exemplarily, the cleaning robot may end the specific mode. Exemplarily, as shown in FIG. 1b ④, a specific mode is switched to a normal mode (for example, a boustrophedon route) to run. Of course, the cleaning robot may execute the same specific mode again, or execute the specific mode again after changing the direction; the cleaning robot may also enter other modes according to instructions or programs after exiting the specific mode, such as navigation mode, obstacle avoidance mode, along-edge mode, etc.

A second implementation of the embodiment is described below with reference to FIG. 1e. After the first preset position is determined in the initial step S110 (thus the starting point of the first stage is determined) and the cleaning robot is located at the starting point of the first stage (such as point C in FIG. 1b ② and FIG. 1e), the first execution step S120 is executed to control the cleaning robot to run along the first path. The first path may specifically comprise: 1) running along a straight line toward a first initial direction for a first predetermined distance; this process is the same as the first implementation, and details are not described herein again. 2) Running along a first arc whose radius is a second predetermined distance toward the first rotation direction, adjusting the direction to a second initial direction, where the second initial direction is opposite to the first initial direction, the first arc is smaller than the circumference of the first circle where the first arc is located; exemplarily, as shown in FIG. 1e, the cleaning robot runs along the first arc EF' whose radius is the second predetermined distance d2 toward the first rotation direction (counterclockwise in FIG. 1e) with the point E as a starting point, and the difference from the first implementation is that the first arc EF' is not necessarily the half circumference of the first circle where it is located (that is, the point F' does not necessarily overlap with the point F), as long as it is smaller than the circumference of the first circle where it is located, and when the cleaning robot reaches the ending point F' of the process, the direction of the cleaning robot is adjusted to the second initial direction L12, and in this case, the running direction of the cleaning robot is the second initial direction L12, which is opposite to the first initial direction L1 and perpendicular to the initial running direction L0 of the cleaning robot (horizontal rightward direction in FIG. 1e). 3) Running along a straight line for a third predetermined distance; this process is the same as the first implementation, and details are not described herein again. 4) Running along a second arc whose radius is a fourth predetermined distance toward the second rotation direction, adjusting the direction to a second initial direction, the second arc is smaller than the circumference of the second circle where the second arc is located; exemplarily, as shown in FIG. 1e, the cleaning robot runs along the arc segment of the second arc GH' whose radius is the fourth predetermined distance d4 toward the second rotation direction (clockwise in FIG. 1e) with the point G as a starting point; and the difference from the first implementation is that the second arc GH' is not necessarily the half circumference of the second circle where it is located (that is, the point H' does not necessarily overlap with the point H), as long as it is smaller than the circumference of the second circle where it is located, and when the cleaning robot reaches the ending point H' of the process, the direction of the cleaning robot is adjusted to L2, and in this case, the running direction L2 of the cleaning robot is the same as the first initial direction L1 (the horizontal leftward direction in FIG. 1e). 5) Running to the ending point of the first path along a straight line toward the first initial direction for the fifth predetermined distance; this process is the same as the first implementation, and details are not described herein again. Therefore, as shown in FIG. 1e, the first path is an S-shaped curve from the starting point C to the ending point D through each point of the points E, F', G, and H'.

In the second execution step S130, the second path is symmetrical with the first path; the second path is an S-shaped curve with the ending point of the first path as the starting point and the starting point of the first path as the ending point. A symmetry manner between the second path and the first path is similar to that in the first implementation, and details are not described herein again. Exemplarily, as shown in FIG. 1e, the second path is an S-shaped curve from the starting point D to the ending point C through each point of the points I, F, G, and J.

A third implementation of the embodiment is described below with reference to FIG. 1f. After the first preset position is determined in the initial step S110 (thus the starting point of the first stage is determined) and the cleaning robot is located at the starting point of the first stage (such as point C in FIG. 1f), the first execution step S120 is executed to control the cleaning robot to run along the first path. The first path may specifically comprise: 1) running along a straight line toward a first initial direction for a first predetermined distance; exemplarily, as shown in FIG. 1f, the cleaning robot runs a first predetermined distance d1 to point E1 along a straight line toward a first initial direction L1 with a point C as a starting point. 2) Rotating by a right angle in situ toward a first rotation direction to a first steering direction; running along a straight line for a second predetermined distance; exemplarily, as shown in FIG. 1f, the cleaning robot rotates by a right angle in situ (that is, rotates by 90° or (360° × n+90°) in situ, where n is a positive integer) toward the first rotation direction (counterclockwise in FIG. 1f) to the first steering direction Lx, and in this case, the running direction Lx (-x direction in FIG. 1f) of the cleaning robot is perpendicular to the first initial direction L1 and opposite to the direction L0; and the cleaning robot runs along a straight line for a second predetermined distance d2' from the point E1 to the point F1. 3) Rotating by a right angle in situ toward the first rotation direction to a second initial direction; running along a straight line for a third predetermined distance; exemplarily, as shown in FIG. 1f, the cleaning robot rotates by the right angle in situ (that is, rotates by 90° or (360° × n+90°) in situ, where n is a positive integer) toward the first rotation direction (counterclockwise in FIG. 1f) to the second initial direction L12, and the cleaning robot runs along the straight line for the third predetermined distance d3 from point F1 to G1. 4) Rotating by a right angle in situ toward the second rotation direction to a first steering direction, running along a straight line for a fourth predetermined distance; exemplarily, as shown in FIG. 1f, the cleaning robot rotates by the right angle in situ (that is, rotates by 90° or (360° × n+90°) in situ, where n is a positive integer) toward the second rotation direction (clockwise in FIG. 1f) to the first steering direction Lx; and the cleaning robot runs along the straight line for the fourth predetermined distance d4' from point G1 to point H1. 5) Rotating by a right angle in situ toward the second rotation direction to a first initial direction, running along a straight line for a fifth predetermined distance to the end of the first path; exemplarily, as shown in FIG. 1f, the cleaning robot rotates by the right angle in situ (that is, rotates by 90° or (360° × n+90°) in situ, where n is a positive integer) toward the second rotation direction (clockwise in FIG. 1f) to the direction L2, and in this case, the running direction L2 of the cleaning robot is the same as the first initial direction L1 (the horizontal leftward direction in FIG. 1f), and the cleaning robot runs along the straight line for the fifth predetermined distance d5 to the ending point D of the first path. Therefore, as shown in FIG. 1f, the first path is an S-shaped curve from the starting point C to the ending point D through each point of the points E1, F1, G1, and H1.

In the second execution step S130, the second path is symmetrical with the first path; the second path is an S-shaped curve with the ending point of the first path as the starting point and the starting point of the first path as the ending point. A symmetry manner between the second path and the first path is similar to that in the first implementation, and details are not described herein again. Exemplarily, as shown in FIG. 1f, the second path is an S-shaped curve from the starting point D to the ending point C through each point of the points I1, F1, G1, and J1.

Therefore, according to the embodiment, during the running of the cleaning robot, when the starting condition is satisfied, the cleaning robot runs in a specific mode (double S mode), that is, the cleaning robot first runs along the S-shaped first path from the starting point of the first stage to the ending point, and then runs along the second path symmetrical with the previous first path from the ending point to the starting point of the original first stage, so that the cleaning robot runs to form a double S-shaped curve (the S-shaped curve corresponding to the first path and the S-shaped curve corresponding to the second path partially overlap each other (such as the FG segment in FIG. 1e), and partially do not overlap (such as the CF segment, the GD segment, the DF segment, and the GC segment in FIG. 1e)), in this way, compared with the problem in the prior art that the same cleaning on the entire work surface results in the inability to perform more targetedly cleaning on the dirty area and the insufficient cleaning degree of the dirty area, the cleaning robot of the embodiment can continuously clean one dirty position at least twice, so that the dirty area can be cleaned more targetedly and effectively.

Based on the technical solution described in Implementation 1, Implementation 2 can be obtained by further introducing step S125.

### Implementation 2:

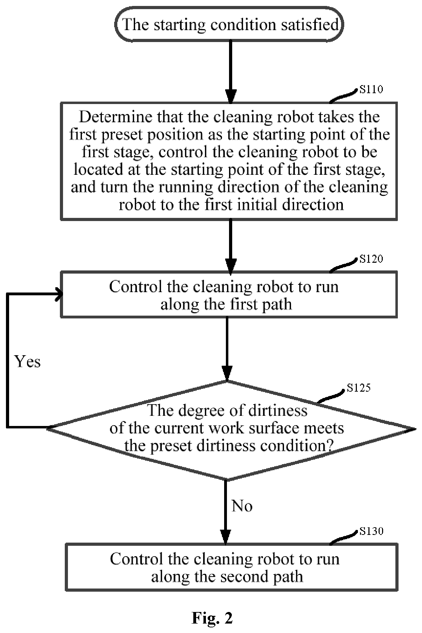

Referring to FIG. 2, the control method may comprise: controlling the cleaning robot to run in a specific mode when a starting condition is satisfied. Controlling the cleaning robot to run in the specific mode comprises the following steps:
In step S110 (initial step), it is determined that the cleaning robot takes the first preset position as the starting point of the first stage, and the cleaning robot is controlled to be located at the starting point of the first stage.
In step S120 (first execution step), the cleaning robot is controlled to run along the first path.
In step S125 (determining step), it is determined whether the degree of dirtiness of the current work surface meets a preset dirtiness condition.

In the embodiment, the current work surface may comprise the surface of the current detected work area, and may also comprise the range that the dirtiness detection sensor can detect on the current work area, for example, if the ground 10cm away from the front of the cleaning robot can be detected according to the parameters of the infrared emitter-receiver pair sensor and its mounting position, the range of the ground 10cm away from the front of the cleaning robot also belongs to the current work surface.

If it is determined in the determining step S125 that the degree of dirtiness of the current work surface meets the preset dirtiness condition, it indicates that the work surface to be cleaned subsequently is still dirty, and in this case, the starting condition is still satisfied, then the first execution step S120 is continued to be executed, the second first path is run to clean the current work surface, the coverage range of the specific mode is extended, so it returns to execute the first execution step S120 to clean the current work surface, wherein the starting point of the second first path is the ending point of the first of the first paths. For a principle and an example of detecting the dirtiness by the dirtiness detection sensor, refer to the above descriptions of the dirtiness detection sensor. If it is determined in the determining step S125 that the degree of dirtiness of the current work surface does not meet the preset dirtiness condition, it indicates that the subsequent work surface to be cleaned is relatively clean, and in this case, the starting condition is not satisfied, so it is not necessary to extend the coverage range of the specific mode, and then the second execution step S130 is executed to run the first second path. When it is determined in the determining step S125 that the degree of dirtiness of the current work surface does not meet the preset dirtiness condition, exemplarily, count how many times the first execution step has been run since the cleaning robot entering this specific mode (that is, calculate how many times the first path has been run); if the cleaning robot has run the first path for N times after entering the specific mode this time, in order to make the ending point of the cleaning robot at the end of this specific mode be the first preset position at the start of the specific mode (that is, the starting point of the first first path), and since the second path is an S-shaped curve symmetrical to the first path, it is necessary to run a second path with the same number as the first path to make the cleaning robot return to the first preset position at the start, and therefore, when it is determined in the determining step S125 that the degree of dirtiness of the current work surface does not meet the preset dirtiness condition, it is necessary to continuously execute N second execution steps, that is, control the cleaning robot to run N second paths. The determining step S125 belongs to the first stage.

For the first path and the second path in the embodiment, reference may be made to the description of the first path and the second path in Implementation 1 and each implementation thereof, and details are not described herein again.

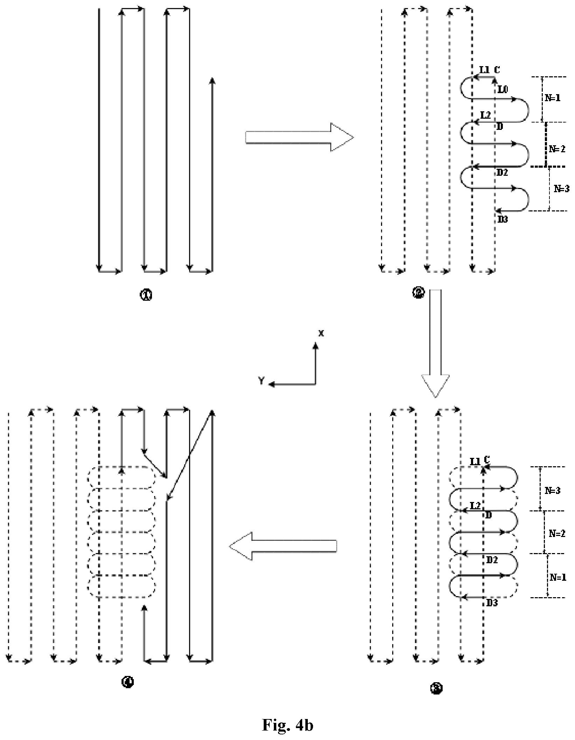

For convenience of description, the embodiment is described below with reference to FIG. 4b, which is a schematic diagram of the cleaning robot running in a specific mode. As shown in FIG. 4b ②, when the starting condition is satisfied, the cleaning robot enters the specific mode at the position C, and the position C is the starting point of the first path or the first combined path to be run in the specific mode. According to the method described in above Implementation 1, the cleaning robot runs to the point D along the S-shaped curve of the first path and completes the first path once, that is, completes the first execution step S120 once (in this case, N = 1), and in this case, executes the determining step S125, and detects, by using the dirtiness detection sensor, whether the degree of dirtiness of the current work surface meets the preset dirtiness condition; if it is determined that the degree of dirtiness of the current work surface meets the preset dirtiness condition, the first execution step S120 is continued to be executed to run to the point D2 along the first path from the point D again, and completes the first path once again, that is, completes the first execution step S120 once again (in this case, N = 2), and in this case, executes the determining step S125 again, and detects, by using the dirtiness detection sensor, whether the degree of dirtiness of the current work surface meets the preset dirtiness condition; if it is determined that the degree of dirtiness of the current work surface meets the preset dirtiness condition, the first execution step S120 is continued to be executed to run to the point D3 along the first path from the point D2 again, and completes the first path once again, that is, completes the first execution step S120 once again (in this case, N = 3), and at this time, executes the determining step S125 again, and detects, by using the dirtiness detection sensor, whether the degree of dirtiness of the current work surface meets the preset dirtiness condition; if it is determined that the degree of dirtiness of the current work surface does not meet the preset dirtiness condition, the second execution step S130 is continuously executed for N times; in this embodiment, N=3, that is, the second execution step S130 is executed for three times, that is, the second path is run for three times sequentially, and the cleaning robot goes back to the original starting point C. Since the second path is symmetrical with the first path, and the second path is an S-shaped curve with the ending point of the first path as a starting point and the starting point of the first path as an ending point, on the premise that the first path is determined, the second path is easy to be determined, as shown by the solid line in the curve on the right side in FIG. 4b ③, the first second path starts to run to the point D2 along the solid S-shaped curve toward the leftward arrow direction with the point D3 as a starting point, and in this case, the first time of second execution step S130 (i.e., the first of the second paths) is completed; then the cleaning robot starts to run to the point D along the solid S-shaped curve toward the leftward arrow direction with the point D2 as a starting point, and in this case, the second time of second execution step S 130 (i.e., the second of the second paths) is completed; then the cleaning robot starts to run to the point C along the solid S-shaped curve toward the leftward arrow direction with the point D as a starting point, and in this case, the third time of second execution step S130 (i.e., the third of the second paths) is completed, thereby returning to the first preset position of the specific mode (i.e., the starting point of the specific mode), namely point C.

For the starting condition, the preset dirtiness condition, and steps S110, S120, and S130, specifically, reference may be made to the descriptions of the starting condition, the preset dirtiness condition, and steps S110, S120, and S130 in Implementation 1, and details are not described herein again.

As can be seen from the above example, in the embodiment, the starting point of the first first path is the first preset position, the starting point of the N-th first path is the ending point of the (N-1)-th first path, the starting point of the first second path is the ending point of the last first path, the starting point of the N-th second path is the ending point of the (N-1)-th second path, and the ending point of the N-th second path is the first preset position. The number of first paths run is the same as the number of second paths.

Therefore, the embodiment can adjust the cleaning range of the deep cleaning in real time according to the actual area of the dirty area while performing more targetedly deep cleaning, thereby improving the cleaning effect of the cleaning robot and the user experience.

Based on the technical solution described in Implementation 1, Implementation 3 can be obtained by further introducing steps S310 to S340.

### Implementation 3:

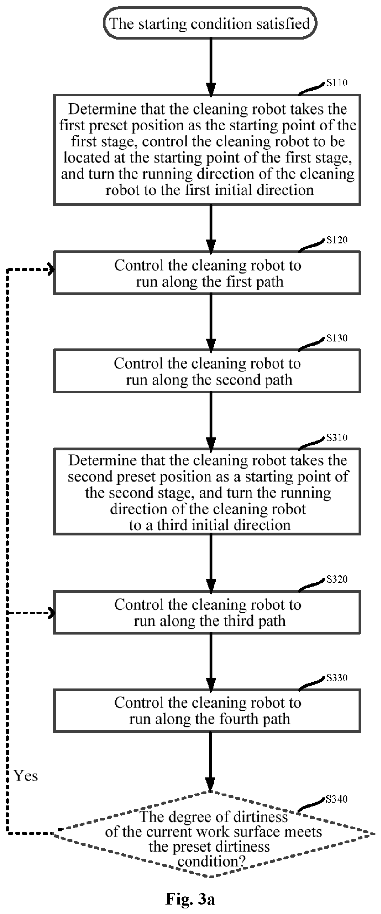

Referring to FIG. 3a, the control method may comprise: controlling the cleaning robot to run in a specific mode when a starting condition is satisfied. Controlling the cleaning robot to run in the specific mode comprises the following steps:
In step S110 (initial step), it is determined that the cleaning robot takes the first preset position as the starting point of the first stage, and the cleaning robot is controlled to be located at the starting point of the first stage.
In step S120 (first execution step), the cleaning robot is controlled to run along the first path.
In step S130 (second execution step), the cleaning robot is controlled to run along the second path.

The first stage comprises a first execution step S120 and a second execution step S130.

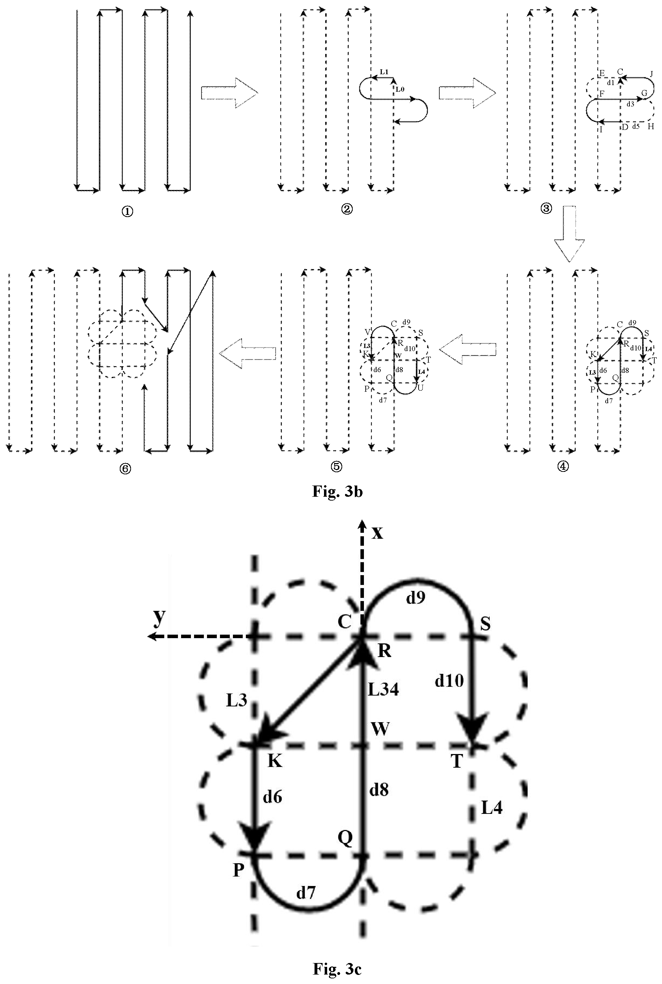

For the starting condition and steps S110 to S130, specifically, reference may be made to the descriptions of the starting condition and steps S110 to S130 in Implementation 1, and FIG. 3b ① to ③, and details are not described herein again.

For the first path and the second path in the embodiment, reference may be made to the description of the first path and the second path in Implementation 1 and each implementation thereof, and details are not described herein again.

The cleaning robot is controlled to run in a specific mode, and it further comprises the following steps after the first stage:
in step S310 (adjusting step), it is determined that the cleaning robot takes the second preset position as a starting point of the second stage, and the running direction of the cleaning robot is turned to a third initial direction. Compared with the first stage of the first execution step S120 and the second execution step S130, the third execution step S320 and the fourth execution step S330 described below may be collectively referred to as a second stage, and therefore, a starting point of the second stage is a starting point of the third execution step S320. The third initial direction is different from the first initial direction. In the embodiment, exemplarily, the third initial direction is set to be perpendicular to the first initial direction. Exemplarily, as shown in FIG. 3b ③, after the first stage is completed, the cleaning robot returns to the starting point C of the first stage; the cleaning robot executes the adjusting step S310, in the embodiment shown in FIG. 3b, the cleaning robot runs from the point C to the second preset position, namely point K (the point K may be at the point F or may not overlap with the point F, and of course, the point K may also be at any set position), as shown in FIG. 3b ④ and FIG. 3c, the starting point of the second stage, that is, the starting point of the third execution step S320, is the point K. Of course, the second preset position may also be the ending point of the second execution step S130, such as point C in FIG. 3b ③ and FIG. 3c, that is, point C may also be used as the starting point of the second stage, that is, the starting point of the third execution step S320.

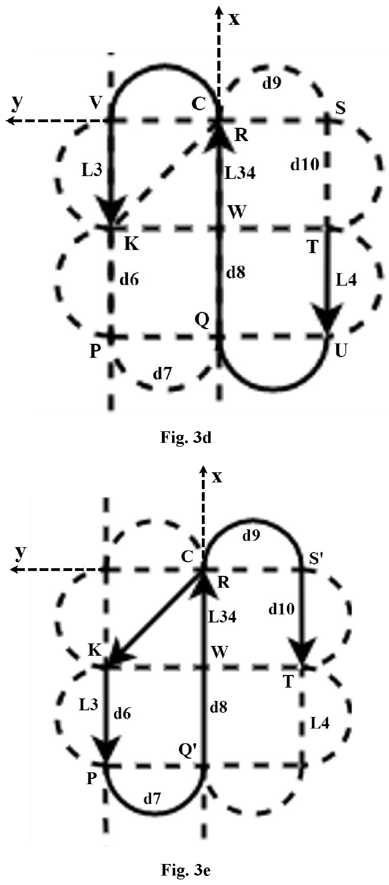

For ease of description, the embodiment is described below with reference to FIG. 3c and FIG. 3d. FIG. 3c and FIG. 3d are respectively enlarged schematic diagrams of a third path and a fourth path (curved path on the right side) in a specific mode in FIG. 3b ④ and ⑤. In a third execution step S320, the cleaning robot is controlled to run along a third path. The third path is an S-shaped curve. The starting point of the third path is the position of the cleaning robot after executing the above adjusting step S310, and the initial direction of the third path is the third initial direction. As shown in FIG. 3c, the third initial direction is the direction L3, and the third initial direction L3 is different from the first initial direction L1. Exemplarily, in FIG. 3c, the third initial direction L3 is set as the downward direction, and it can be seen that it is parallel to the initial running direction L0 of the cleaning robot (the upward direction in FIG. 3b ②) and perpendicular to the first initial direction L1 (the leftward direction in FIG. 3b ②). Of course, the third initial direction may also be other directions different from the first initial direction L1. Exemplarily, as shown in FIG. 3c, the cleaning robot starts from the starting point K and runs along the third path of the S-shaped curve toward the third initial direction L3, for example, from the starting point K in FIG. 3c, the S-shaped path runs through each point of the points P, Q, R, and S to the ending point T (the point K may or may not overlap with the point F; similarly, the point P and the point I, the point Q and the point D, the point R and the point C, the point S and the point J, and the point T and the point G may or may not overlap with each other), and the third path is completed. For a specific running manner, reference may be made to the description of the first execution step S120 (running along the first path) in above Implementation 1, and details are not described herein again.

In a fourth execution step S330, the cleaning robot is controlled to run along a fourth path. The fourth path is an S-shaped curve symmetrical to the third path, and the fourth path takes an ending point of the third path as a starting point and a starting point of the third path as an ending point.

Because the fourth path is an S-shaped curve symmetrical to the third path, and the fourth path takes the ending point of the third path as a starting point and takes the starting point of the third path as an ending point, the fourth path can be easily determined on the premise that the third path is determined. Exemplarily, as shown in FIG. 3d, the cleaning robot starts from the starting point T of the fourth path (which is also the ending point of the third path), and runs along the fourth path of the S-shaped curve toward the fourth initial direction L4 (the direction L4 is the same as the direction L3), for example, from the starting point T of FIG. 3d, the S-shaped path runs through each point of the points U, Q, R, and V to the ending point K (the point T may or may not overlap with the point G; similarly, the point U and the point H, the point Q and the point D, the point R and the point C, the point V and the point E, and the point K and the point F may or may not overlap with each other), and the fourth path is completed. Exemplarily, the point P and the point V, the point Q and the point R, and the point U and the point S are mirror-symmetrical with the KT connecting line as the symmetry axis; or the point P and the point U, the point K and the point T, and the point V and the point S are mirror-symmetrical with the QR connection line as the symmetry axis, so that the fourth path is symmetrical with the third path; of course, it is not limited to the KT connecting line or the QR connection line as the symmetry axis, and it may also be, for example, an oblique line of the PS connection line or the UV connection line, or rotational symmetry with the center point W of the third path and the fourth path as the symmetry point, etc., which is not limited in the present disclosure. For a specific running manner, reference may be made to the description of the second execution step S130 (running along the second path) in above Implementation 1, and details are not described herein again.

In the embodiment, in order to cover a larger cleaning range, when the starting condition is satisfied, the cleaning robot first runs the first double S-shaped curve (such as the Arabic numeral-8 shapes curve formed by the first path and the second path shown in FIG. 1b ③ and ④ and FIG. 3b ③) in the first stage of the specific mode according to the control method of Implementation 1, then adjusts the running direction of the cleaning robot to the third initial direction according to the adjusting step S310 (in some embodiments, the second preset position needs to be adjusted), and then runs the second double S-shaped curve of steps S320 to S330 in the second stage of the specific mode according to Implementation 3 (such as the Arabic numeral-8 shapes curve formed by the third path and the fourth path shown in FIG. 3b ⑤ and ⑥). Therefore, in the specific mode of the embodiment, the cleaning robot respectively runs two double S-shaped curves in two directions perpendicular to each other, and in the two double S-shaped curves, some paths overlap (for example, the FG segment in FIG. 3b is the overlapping part of the first path and the second path, and the QR segment is the overlapping part of the third path and the fourth path); some paths are relatively close (for example, the VP segment and the EI segment, the RQ segment and the CD segment, the SU and the JH segment, the VS segment and the EJ segment, the KT segment and the FG segment, and the PU segment and the IH segment in FIG. 3b, etc.), considering that the cleaning robot has a certain work width, it can also have the effect of repeated cleaning for relatively close paths, in this way, compared with the prior art that the dirty area cannot be cleaned more pertinently and the cleaning degree of the dirty area is insufficient, the cleaning robot of the embodiment cleans one dirty position multiple times, so that the dirty area can be cleaned more targetedly and effectively.

Exemplarily, in the first implementation of the embodiment, the second preset position is determined in the adjusting step S310 (thus the starting point of the second stage is determined), and the cleaning robot is located at the starting point of the second stage (for example, the cleaning robot moves from the ending point C of the second execution step S130 to the second preset position K in FIG. 3b ④ or FIG. 3c), and then the running direction of the cleaning robot is turned to the third initial direction L3, and the third execution step S320 is executed to control the cleaning robot to run along the third path. The third path may specifically comprise: 1) running along a straight line toward the third initial direction for a sixth predetermined distance; exemplarily, as shown in FIG. 3c, the cleaning robot runs the sixth predetermined distance d6 to point P along the straight line toward the third initial direction L3 with the point K as the starting point of the second stage. 2) Running along a third arc whose radius is a seventh predetermined distance toward a third rotation direction (such as counterclockwise direction), the running distance is a half circumference of a third circle where the third arc is located; exemplarily, as shown in FIG. 3c, the cleaning robot runs to point Q along the third arc PQ segment whose radius is the seventh predetermined distance d7 toward the third rotation direction (counterclockwise direction in FIG. 3b ④) with the point P as a starting point, the running distance is the half circumference of the third circle where the third arc is located, that is, the distance of the arc segment PQ in FIG. 3b ④, and in this case, the running direction L34 of the cleaning robot is parallel to and opposite to the third initial direction L3 (upward direction in FIG. 3c). 3) Running along a straight line for the eighth predetermined distance, in this case, the running direction of the cleaning robot is parallel to and opposite to the third initial direction L3; exemplarily, as shown in FIG. 3c, the cleaning robot runs along the straight line toward the running direction L34 for the eighth predetermined distance d8 with the point Q as the starting point, and runs to the R point. In some embodiments, the eighth predetermined distance is twice the sixth predetermined distance, and in some embodiments, the eighth predetermined distance is equal to the sixth predetermined distance. 4) Running along a fourth arc whose radius is a ninth predetermined distance toward a fourth rotation direction (such as clockwise direction), the running distance is a half circumference of a fourth circle where the fourth arc is located; exemplarily, as shown in FIG. 3c, the cleaning robot runs along the fourth arc RS segment whose radius is the ninth predetermined distance d9 toward the fourth rotation direction (the clockwise direction in FIG. 3c) with the R point as the starting point, and the running distance is the distance of the half circle of the fourth circle where the fourth arc is located, that is, the arc segment RS in FIG. 3c, to the point S; in this case, the running direction L4 of the cleaning robot is the same as the third initial direction L3 (the downward direction in FIG. 3b ④). In some embodiments, the ninth predetermined distance is equal to the seventh predetermined distance, in this case, the third arc is the same as the fourth arc (comprising the same radius of the circle where it is located and the same length of the two arc segments), and the third circle is the same as the fourth circle (the same radius); in some embodiments, the fourth arc may be different from the third arc, and the third arc and the fourth arc may not be half circumference, in this case, the cleaning robot is not required to run the semicircle along the arc, and even if it does not run to the semicircle or exceeds the semicircle, the cleaning robot may still continue to run the rear path along the direction parallel to the direction L3 by adjusting the direction. 5) Running along a straight line toward the third initial direction for the tenth predetermined distance to the ending point of the third path; exemplarily, as shown in FIG. 3c, the cleaning robot runs along the straight line toward the direction L4 (the same as the third initial direction L3) for the tenth predetermined distance d10 to the ending point T of the third path with the point S as a starting point. For example, the tenth predetermined distance may be equal to the sixth predetermined distance. Therefore, as shown in FIG. 3c, the third path is an S-shaped curve from the starting point K to the ending point T along the solid line in the figure through each point of the points P, Q, R, and S.

The sixth to tenth predetermined distances are not limited in the present disclosure, and may be set according to requirements. For example, the sixth predetermined distance may be 1 half-width, the seventh predetermined distance may be 0.5 of half-width, the eighth predetermined distance may be 2 half-widths, the ninth predetermined distance may be 0.5 of half-width, and the tenth predetermined distance may be 1 half-width; the third rotation direction may be a counterclockwise direction, and when the fourth rotation direction is a clockwise direction, the motion trajectory obtained by controlling the cleaning robot to run in the specific mode is shown in FIG. 3b ④ and ⑤. It can be seen from FIG. 3b that the running trajectory of the cleaning robot in the actual work area is two Arabic numeral-8 shapes formed by four S-shaped curves.

It should be noted that although the two numeral-8 shapes in FIG. 3b are symmetrical, the present disclosure is not limited thereto, the two numeral-8 shapes formed by the four S-shaped curves may be asymmetrical, and the two numeral-8 shape runs may be asymmetrical by adjusting the corresponding predetermined distances involved in the four S-shaped curves.

It should be understood that in the fourth execution step, the fourth path may be formed according to the principle of symmetry with the third path, and the cleaning robot may be controlled to run along the fourth path. Exemplarily, as shown in FIG. 3d, the fourth path is an S-shaped curve that sequentially passes through points U, Q, R, and V from a starting point T to an ending point K along a solid line in the figure, and for ease of description, the two S-shaped curves of the third path and the fourth path may be referred to as double S-shaped curves, as can be seen from Fig. 3d, the double S-shaped curves form an Arabic numeral-8 shapes.

A first implementation of the embodiment is described below with reference to FIG. 3b ⑤ and FIG. 3d. As shown in FIG. 3b ⑤ and FIG. 3d, when the cleaning robot completes the third execution step S320-after controlling the cleaning robot to run along the third path and reaching the point T, the fourth execution step S330 is executed. The fourth execution step S330 is to control the cleaning robot to run along a fourth path. The fourth path is an S-shaped curve symmetrical to the third path, and the fourth path takes an ending point of the third path as a starting point and a starting point of the third path as an ending point. According to the above description of the third path, the fourth path may specifically comprise: 1) starting from the point T and running to the point U toward the direction L4 for a sixth predetermined distance d6, wherein the point U and the point S are mirror-symmetrical with the KT connecting line as the symmetry axis. 2) Running along the arc segment of the fourth arc UQ whose radius is the ninth predetermined distance d9 toward the fourth rotation direction (clockwise in FIG. 3b ⑤ and FIG. 3d) with the point U as a starting point, the running distance is the half circumference of the circle where the fourth arc is located, and is also the distance of the arc segment UQ in FIG. 3b ⑤ and FIG. 3b, and runs to the point Q; wherein the arc segment of the fourth arc UQ and the arc segment of the fourth arc RS are mirror-symmetrical with the KT connecting line as the symmetry axis. 3) Running along a straight line for a distance d8 to a point R with a point Q as a starting point, where the point R and the point Q are mirror-symmetrical with a KT connecting line as a symmetry axis. 4) Running along the arc segment of the third arc RV whose radius is the seventh predetermined distance d7 toward the third rotation direction (counterclockwise direction in FIG. 3b ⑤ and FIG. 3d) with the point R as a starting point; the running distance is the half circumference of the circle where the third arc is located, and is also the distance of the arc segment RV in FIG. 3b ⑤ and FIG. 3d, and runs to the point V; wherein the arc segment of the third arc RV and the arc segment of the third arc QP are mirror-symmetrical with the KT connecting line as the symmetry axis. 5) Running to a point K along a straight line toward the third initial direction L3 for a sixth predetermined distance d6 with the point V as a starting point; wherein the point V and the point P are mirror-symmetrical with a line connecting KT as a symmetry axis. The KT connecting line here may be a symmetry axis of the fourth path and the third path. Of course, there may also be other symmetry axes and symmetry manners, for example, the fourth path and the third path are mirror-symmetrical with the QR connecting line as the symmetry axis in FIG. 3b ⑤ and FIG. 3d, in this case, the point K and the point T are mirror-symmetrical with the QR connecting line as the symmetry axis, the point P and the point U are mirror-symmetrical with the QR connecting line as the symmetry axis, the point V and the point S are mirror-symmetrical with the QR connecting line as the symmetry axis, the arc segment PQ and the arc segment UQ are mirror-symmetrical with the QR connecting line as the symmetry axis, the arc segment VR and the arc segment SR are mirror-symmetrical with the QR connecting line as the symmetry axis, and the line segment VP and the line segment SU are mirror-symmetrical with the QR connecting line as the symmetry axis. In the above implementation, it can be learned that the starting point T of the fourth path is the ending point of the third path, and the ending point K of the fourth path is the starting point of the third path.

After the above fourth execution step S330 is completed, that is, after the second stage is completed, exemplarily, the cleaning robot may end the specific mode. Exemplarily, as shown in FIG. 3b ⑥, a specific mode is switched to a normal mode (for example, a boustrophedon route) to run. Of course, the cleaning robot may execute the same specific mode again, or execute the specific mode again after changing the direction; the cleaning robot may also enter other modes according to instructions or programs after exiting the specific mode, such as navigation mode, obstacle avoidance mode, along-edge mode, etc.

A second implementation of the embodiment is described below with reference to FIG. 3e. In the adjusting step S310, the second preset position is determined (thus the starting point of the second stage is determined), and the cleaning robot is located at the starting point of the second stage (for example, the cleaning robot runs from the ending point C of the second execution step S130 to the second preset position K in FIG. 3e), and then the running direction of the cleaning robot is turned to the third initial direction L3, and the third execution step S320 is executed to control the cleaning robot to run along the third path. The third path may specifically comprise: 1) running along a straight line toward the third initial direction for a sixth predetermined distance; this process is the same as the first implementation, and details are not described herein again. 2) Running along a third arc whose radius is a seventh predetermined distance toward a third rotation direction (such as counterclockwise direction), and adjusting the direction to a fourth initial direction, the fourth initial direction is opposite to the third initial direction, and the third arc is smaller than the circumference of the third circle where it is located; exemplarily, as shown in FIG. 3e, the cleaning robot runs along the arc segment of the third arc PQ' whose radius is the seventh predetermined distance d7 toward the third rotation direction (counterclockwise in FIG. 3e) with the point P as a starting point, and the difference from the first implementation is that the first arc PQ' is not necessarily the half circumference of the third circle where it is located (that is, the point Q' does not necessarily overlap with the point Q), as long as it is smaller than the circumference of the third circle where it is located, and when the cleaning robot reaches the ending point Q' of the process, the direction of the cleaning robot is adjusted to be the direction L34, and in this case, the running direction L34 of the cleaning robot is opposite to the third initial direction L3 (upward direction in FIG. 3e). 3) Running along a straight line for an eighth predetermined distance; this process is the same as the first implementation, and details are not described herein again. 4) Running along a fourth arc whose radius is a ninth predetermined distance toward a fourth rotation direction (such as clockwise direction), and adjusting the direction to the third initial direction, the fourth arc is smaller than the circumference of the fourth circle where the fourth arc is located; exemplarily, as shown in FIG. 3e, the cleaning robot runs along the arc segment of the fourth arc RS' whose radius is the ninth predetermined distance d9 toward the fourth rotation direction (the clockwise direction in FIG. 3e) with the point R as a starting point; and the difference from the first implementation is that the fourth arc RS' is not necessarily the half circumference of the fourth circle where it is located (that is, the point S' does not necessarily overlap with the point S), as long as it is less than the circumference of the fourth circle where it is located, and when the cleaning robot reaches the ending point S' of the process, the direction of the cleaning robot is adjusted to L4, and in this case, the running direction L4 of the cleaning robot is the same as the third initial direction L3 (the downward direction in FIG. 3e). 5) Running to the ending point of the third path along a straight line toward the third initial direction for the tenth predetermined distance; this process is the same as the first implementation, and details are not described herein again. Therefore, as shown in FIG. 3e, the third path is an S-shaped curve from the starting point K to the ending point T through each point of the points P, Q', R, and S'. It should be understood that the fourth path may be formed according to the principle of symmetry with the third path, and the cleaning robot may be controlled to run along the fourth path. The sixth to tenth predetermined distances are not limited in the present disclosure, and may be set according to requirements. By comparing the second implementation of the present embodiment with the second implementation of the first embodiment, it can be seen that the third path of the second implementation of the present embodiment is similar to the first path of the second implementation of the first embodiment, and the fourth path of the second implementation of the present embodiment can be derived by analogy with reference to the second path of the second implementation of the first embodiment, and details are not described herein again; similarly, the third path and the fourth path of the third implementation of the present embodiment can be derived with reference to the first path and the second path of the third implementation of the first embodiment, and details are not described herein again.

Therefore, according to the embodiment, during the running of the cleaning robot, under the condition that the starting condition is satisfied, the cleaning robot runs in a specific mode, that is, the cleaning robot first completes the running of the first double S-shaped curve formed by the first path and the second path, then determines the second preset position as the starting point of the second stage and adjusts the running direction of the cleaning robot as the third initial direction, and then runs the second double S-shaped curve formed by the third path and the fourth path, so in the specific mode of the embodiment, the cleaning robot respectively runs two double S-shaped curves in two directions perpendicular to each other, and in the two double S-shaped curves, some paths overlap (for example, the FG segment in FIG. 3e is the overlapping part of the first path and the second path, and the Q' R segment is the overlapping part of the third path and the fourth path), and some paths are relatively close (for example, FI segment and KP segment, ID segment and PQ segment, CD segment and RQ' segment, CJ segment and RS' segment, JG segment and S'T segment, FG segment and KT segment, etc. comparing Fig. 1e with Fig. 3e), considering that the cleaning robot has a certain work width, it can also have the effect of repeated cleaning for relatively close paths, in this way, compared with the problem in the prior art that the same cleaning on the entire work surface results in the inability to perform more targetedly cleaning on the dirty area and the insufficient cleaning degree of the dirty area, the cleaning robot of the embodiment cleans one dirty position multiple times, so that the dirty area can be cleaned more targetedly and effectively.

As shown in FIG. 3a, after the fourth execution step S330, the above control method may further comprise a determining step S340 (the determining step S340 belongs to the second stage), in step S340, it is determined whether the degree of dirtiness of the current work surface meets the preset dirtiness condition, and if it is determined that the degree of dirtiness of the current work surface meets the preset dirtiness condition, the control method returns to continue to execute the first execution step S120 or the third execution step S320. The determining step S340 is the same as the determining step S125 in Implementation 2, and details are not described herein again.

Therefore, according to the present embodiment, not only can more targetedly and more effective cleaning be performed on the dirty area, but also the execution times of the first stage can be adjusted according to the actual cleaning situation of the dirty area while performing more targetedly deep cleaning, thereby improving the cleaning effect of the cleaning robot and the user experience.

### Implementation 4:

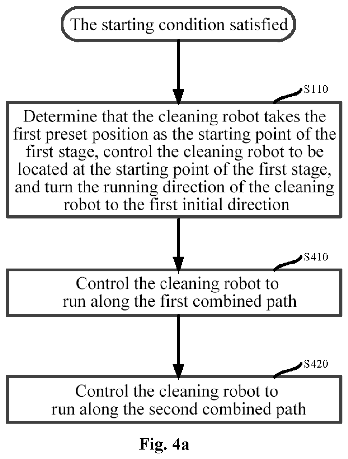

Referring to FIG. 4a, the control method may comprise: controlling the cleaning robot to run in a specific mode when a starting condition is satisfied. Controlling the cleaning robot to run in the specific mode comprises the following steps:
In step S110 (initial step), it is determined that the cleaning robot takes the first preset position as the starting point of the first stage, and the cleaning robot is controlled to be located at the starting point of the first stage. For the starting condition and step S110, specifically, reference may be made to the descriptions of the starting condition and step S110 in Implementation 1, and details are not described herein again.
In step S410 (first execution step), the cleaning robot is controlled to run along the first combined path. The first combined path is a path formed by connecting M S-shaped first paths end to end, in order to be unified with the terms in the above embodiments, in the embodiment, the initial direction of the first combined path, that is, the direction of the first first path in the first combined path, is referred to as the first initial direction of the first path, and the first initial direction of the first path is perpendicular to the initial running direction of the cleaning robot; M is a positive integer greater than 1; and the ending point of the first combined path is the ending point of the M-th first path.

In the embodiment, M is the number of first paths constituting the first combined path, and M may be preset, for example, M is preset to 3. The starting point and the ending point of the first combined path are respectively the starting point of the first first path and the ending point of the M-th first path, and the initial direction of the first combined path is the first initial direction of the first path (since the first initial directions of all the first paths in the first combined path are the same, the initial direction of the first combined path is both the first initial direction of the first first path and the first initial direction of each of the first paths in it). The first preset position is determined as the starting point of the first stage. In order to be consistent with the terminology in the above embodiments, the first stage herein also comprises a first execution step and a second execution step. In the embodiment, obviously, the starting point of the first stage is both the starting point of the first combined path and the starting point of the first first path in the first combined path. The next first path takes an ending point of a previous first path as a starting point (therefore, the first combined path is referred to as a path formed by combining M S-shaped first paths end to end).

For the first path and the second path in the embodiment, reference may be made to the description of the first path and the second path in Implementation 1 and each implementation thereof, and details are not described herein again.

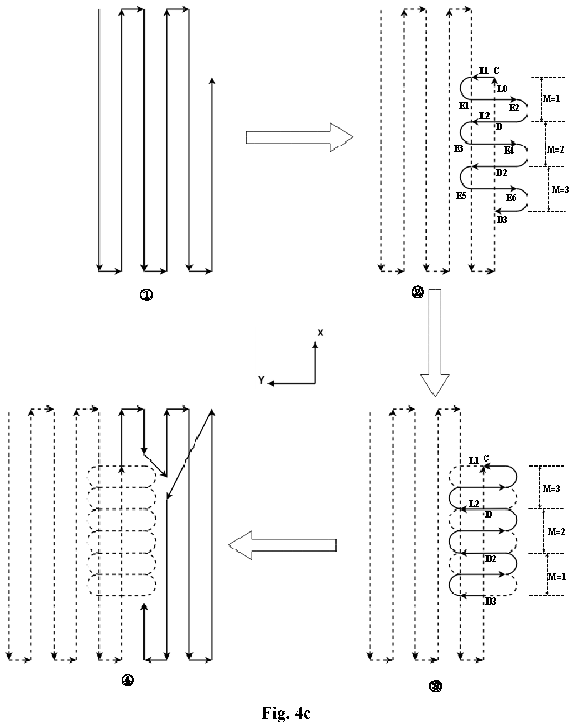

Exemplarily, M = 3 is preset as an example, and the first execution step S410 is described below with reference to FIG. 4c. FIG. 4c is a schematic diagram of the cleaning robot running in a specific mode. The initial running direction of the cleaning robot is the X direction (for example, the direction L0 below the point C in the FIG. 4c ②), since the first initial direction of the first path is perpendicular to the initial running direction L0 of the cleaning robot, the initial direction of the first combined path is the Y direction, for example, it may be the direction L1 pointing to the +y direction to the left of point C in FIG. 4c ②. In the embodiment, exemplarily, as shown in FIG. 4c ②, when the starting condition is satisfied, the cleaning robot enters the specific mode at the position C. If the position C is set as the first preset position, the position C is the starting point of the first stage in the specific mode, and is also the starting point of the first combined path to be run by the cleaning robot. According to the method described in above Implementation 1, the cleaning robot runs along the S-shaped curve of the first first path to the ending point D of the first path, and completes the first first path (in this case, M = 1); then continues to run the second first path to the point D2 along the S-shaped curve of the first path with the ending point D of the first first path as a starting point, and the second first path is completed (in this case, M = 2); then continues to run the third first path to the point D3 along the S-shaped curve of the first path with the ending point D2 of the second first path as a starting point, and completes the third first path (in this case, M = 3). In this case, it is determined that M = 3, and the preset number of times of the first path has been reached, then the first execution step S120 is not continued to be executed, and in this case, the cleaning robot is located at the ending point D3 of the third first path, that is, the ending point of the first combined path.

In step S420 (second execution step), the cleaning robot is controlled to run along the second combined path. The second combined path is symmetrical with the first combined path; the second combined path is a path formed by connecting M S-shaped second paths end to end; the starting point of the second combined path is the starting point of the first second path and is the same as the ending point of the first combined path, and the ending point of the second combined path is the ending point of the M-th second path, which is also the same as the starting point of the first combined path. A starting point of a first second path is an ending point of the first combined path, and the next second path takes an ending point of a previous second path as a starting point (therefore, the second combined path is referred to as a path formed by combining M S-shaped second paths end to end). A symmetry manner of the second combined path and the first combined path is similar to the symmetry manner of the second path and the first path described in above Implementation 1, and details are not described herein again.

The second execution step S420 is described below with reference to FIG. 4c. As shown in FIG. 4c ③, when the cleaning robot completes the first execution step S410-after the cleaning robot is controlled to run along the first combined path and reaches the point D3, the cleaning robot starts from the point D3, runs the second path for three times along the solid line trajectory in figure through the point D2 and the point D sequentially, and finally reaches the point C. Because the second combined path is symmetric to the first combined path, and the second combined path takes the ending point of the first combined path as a starting point and takes the starting point of the first combined path as an ending point, the second combined path is easily determined on the premise that the first combined path is determined. Exemplarily, as shown by the solid line in the double S-shaped curve on the right side in FIG. 4c ③, the first second path starts to run to the point D2 along the solid S-shaped curve toward the leftward arrow direction with D3 as the starting point, and in this case, the first second path is completed (M = 1 in this case); then the cleaning robot starts to run to the point D along the solid S-shaped curve toward the leftward arrow direction with the ending point D2 of the first second path as the starting point, and in this case, the second of the second paths is completed (M = 2 in this case); then the cleaning robot starts to run to the point C along the solid S-shaped curve toward the leftward arrow direction with the ending point D of the second second path as the starting point, and in this case, the third second path is completed (M = 3 in this case), so as to return to the starting point C of the first combined path (i.e., the starting point of the first stage of the specific mode).

After the above second execution step S420 is completed, that is, after the first stage is completed, exemplarily, the cleaning robot may end the specific mode, and exemplarily, as shown in FIG. 4c ④, the cleaning robot switches from the specific mode to the normal mode (for example, the boustrophedon route) to run. Of course, the cleaning robot may execute the same specific mode again, or execute the specific mode again after changing the direction; the cleaning robot may also enter other modes according to instructions or programs after exiting the specific mode, such as navigation mode, obstacle avoidance mode, along-edge mode, etc.

In the embodiment, in order to cover a larger cleaning range, during the running of the cleaning robot, when the starting condition is satisfied, the cleaning robot executes the first stage in a specific mode (referred to as a double-S combination mode in the embodiment), that is, the cleaning robot first runs, from the starting point of the first stage to the ending point, along the first combined path formed by combining the M S-shaped first paths end to end, and then runs, from the ending point of the first combined path to the starting point of the first stage, along the second combined path formed by combining the M S-shaped second paths end to end that are symmetrical to the first combined path, so that the cleaning robot completes a double S-shaped combination curve (the S-shaped curve formed by combining the M S-shaped first paths end to end corresponding to the first combined path and the S-shaped curve formed by combining the M S-shaped second paths end to end corresponding to the second combined path partially overlap each other (for example, the E1E2 segment, the E3E4 segment, and the E5E6 segment in FIG. 4c), so that the current work surface is cleaned for multiple times. Therefore, according to the embodiment, not only can more targetedly and more effective cleaning be performed on the dirty area, but also the cleaning range of deep cleaning is increased, thereby improving the cleaning effect of the cleaning robot and the user experience.

Based on the technical solution described in Implementation 4, Implementation 5 can be obtained by further introducing step S510.

### Implementation 5:

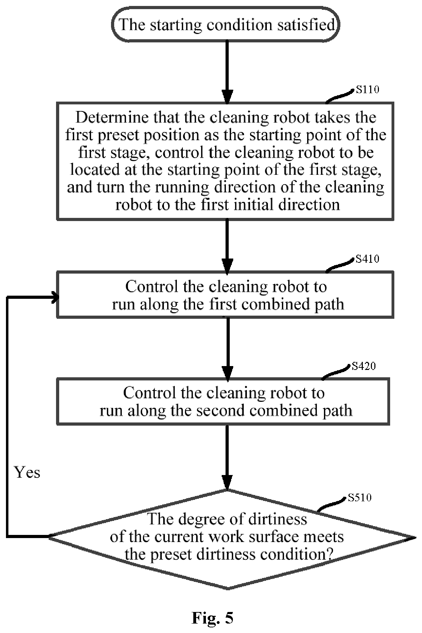

Referring to FIG. 5, the control method may comprise: controlling the cleaning robot to run in a specific mode when a starting condition is satisfied. Controlling the cleaning robot to run in the specific mode comprises the following steps:
In step S110 (initial step), it is determined that the cleaning robot takes the first preset position as the starting point of the first stage, and the cleaning robot is controlled to be located at the starting point of the first stage.
In step S410 (first execution step), the cleaning robot is controlled to run along the first combined path.
In step S420 (second execution step), the cleaning robot is controlled to run along the second combined path.

The first stage comprises a first execution step S410 and a second execution step S420.

For the starting condition and steps S110 and S410 to S420, specifically, reference may be made to the description of the starting condition and steps S110 and S410 to S420 in Implementation 4, and details are not described herein again.

For the first path and the second path in the embodiment, reference may be made to the description of the first path and the second path in Implementation 1 and each implementation thereof, and details are not described herein again.

In step S510 (determining step), it is determined whether the degree of dirtiness of the current work surface meets a preset dirtiness condition. The determining step S510 belongs to the first stage.

In the embodiment, the current work surface may comprise the surface of the current detected work area, and may also comprise the range that the dirtiness detection sensor can detect on the current work area, for example, if the ground 10cm away from the front of the cleaning robot can be detected according to the parameters of the infrared emitter-receiver pair sensor and its mounting position, the range of the ground 10cm away from the front of the cleaning robot also belongs to the current work surface.

The embodiment is described below with reference to FIG. 4c. When the cleaning robot completes the second execution step S420-after controlling the cleaning robot to run along the second combined path and reaching the point C, the determination step S510 is executed. If it is determined in the determining step S510 that the degree of dirtiness of the current work surface meets the preset dirtiness condition, it indicates that the current work surface still fails to meet the cleaning requirement and is still dirty after the first stage of the first execution step S410 and the second execution step S420, and in this case, the starting condition is still satisfied, and the above first execution step S410 is repeatedly executed, and the first combined path is run again to clean the current work surface, which is specifically referred to the first execution step S410 of the Implementation 4, and details are not described herein again. Then, the second execution step S420 is executed, and the second combined path is run again to clean the current work surface, which is specifically referred to the second execution step S420 of the Implementation 4 and details are not described herein again. Therefore, the number of executions of the first stage of the specific mode is increased to achieve emphatical and focused cleaning of the current work surface. For a principle and an example of detecting the dirtiness by the dirtiness detection sensor, refer to the above descriptions of the dirtiness detection sensor. If it is determined in the determining step S510 that the degree of dirtiness of the current work surface does not meet the preset dirtiness condition, it indicates that the work surface that has just been cleaned is relatively clean and does not need to be cleaned again. In this case, because the starting conditions are not satisfied, the cleaning robot will not run the first stage of the specific mode again. In this case, exemplarily, the cleaning robot may exit a specific mode, for example, may run in a normal mode for the boustrophedon route. Of course, the cleaning robot may also execute the specific mode again after changing the direction, or enter other modes according to instructions or programs after exiting the specific mode, such as navigation mode, obstacle avoidance mode, and along-edge mode, etc.

Therefore, according to the present embodiment, not only can more targetedly and more effective cleaning be performed on the dirty area, but also the execution times of the first stage can be adjusted according to the actual cleaning situation of the dirty area while performing more targetedly deep cleaning, thereby improving the cleaning effect of the cleaning robot and the user experience.

Based on the technical solution described in Implementation 4, Implementation 6 can be obtained by further introducing steps S610 to S640.

### Implementation 6:

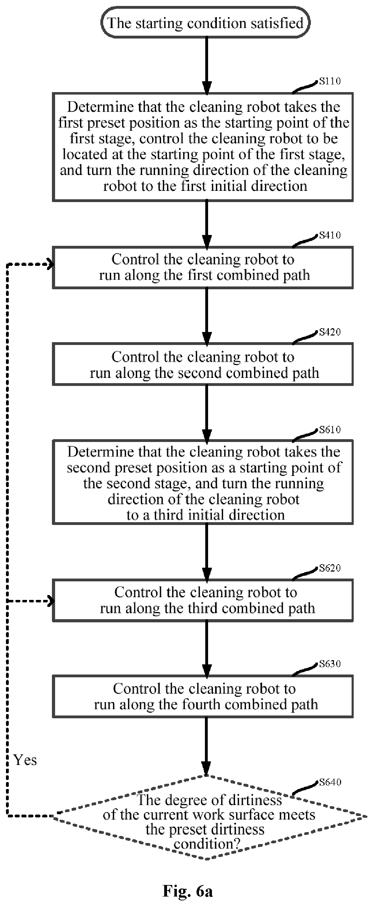

Referring to FIG. 6a, the control method may comprise: controlling the cleaning robot to run in a specific mode when a starting condition is satisfied. Controlling the cleaning robot to run in the specific mode comprises the following steps:
In step S110 (initial step), it is determined that the cleaning robot takes the first preset position as the starting point of the first stage, and the cleaning robot is controlled to be located at the starting point of the first stage.
In step S410 (first execution step), the cleaning robot is controlled to run along the first combined path.
In step S420 (second execution step), the cleaning robot is controlled to run along the second combined path.

The first stage comprises a first execution step S410 and a second execution step S420.

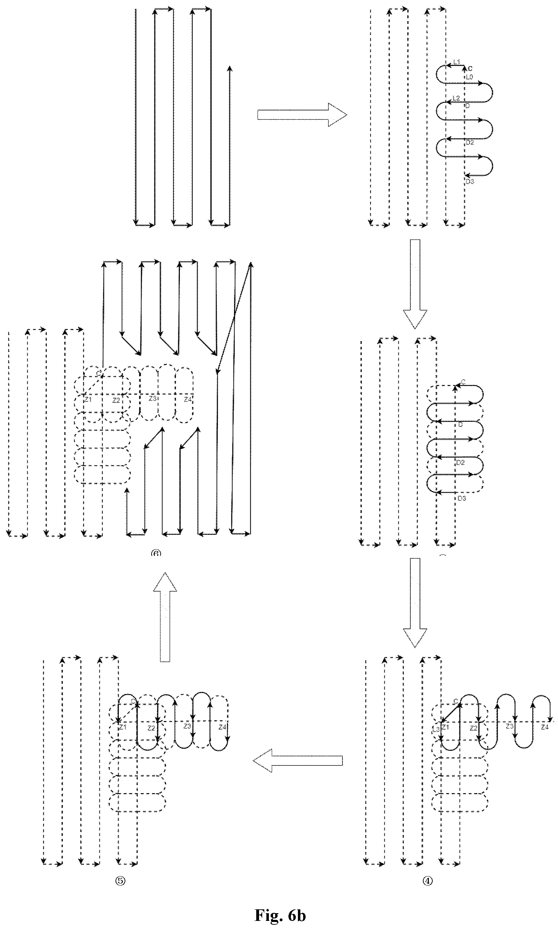

For the starting condition and steps S110 and S410 to S420, specifically, reference may be made to the description of the starting condition and steps S110 and S410 to S420 in Implementation 4 and FIG. 6b ① to ③, and details are not described herein again.

The cleaning robot is controlled to run in a specific mode, and it further comprises the following steps after the first stage:
In step S610 (adjusting step), it is determined that the cleaning robot takes the second preset position as a starting point of the second stage, and the running direction of the cleaning robot is turned to a third initial direction. Compared with the first stage of the first execution step S410 and the second execution step S420, the third execution step S620 and the fourth execution step S630 described below may be collectively referred to as a second stage, and therefore, a starting point of the second stage is a starting point of the third execution step S620. The third initial direction is different from the first initial direction. In the embodiment, exemplarily, the third initial direction is set to be parallel to the initial running direction of the cleaning robot or perpendicular to the first initial direction.

For the first path, the second path, the third path, and the fourth path in the embodiment, reference may be made to the descriptions of the first path, the second path, the third path, and the fourth path in the foregoing each embodiment and each implementation, and details are not described herein again.

Similar to Implementation 4, M = 3 is preset. During normal running of the cleaning robot, as shown in FIG. 6b ①; when the cleaning robot runs to the point C, the starting condition is satisfied, the cleaning robot enters the specific mode, and in this case, the point C is determined as the first preset position, so the point C is the starting point of the first stage, and in this case, the cleaning robot is located at the point C, and then executes the first execution step S410, as shown in FIG. 6b ②; after the cleaning robot completes the first execution step and reaches the point D3, the first combined path comprising the three first paths has been completed, and the cleaning robot executes the second execution step S420, and goes back to the starting point C of the first stage, thereby completing the first stage of the specific mode. The foregoing process has been described in detail in Implementation 4, and details are not described herein again. Then, the cleaning robot executes the adjusting step S610, and determines that Z1 is the second preset position, then point Z1 is the starting point of the second stage, that is, the starting point of the third execution step S620, and the cleaning robot runs from point C to the second preset position, namely point Z1 (the implementation of point Z1 of the second preset position is the same as that of point K of the second preset position of Implementation 3, and details are not described herein again), and then the running direction of the cleaning robot turns to the third initial direction L3, which is different from the first initial direction L1, exemplarily, the embodiment sets the third initial direction L3 perpendicular to the first initial direction L1, as shown in Fig. 6b ④. It should be noted that the second preset position may also be the ending point of the second execution step S420, such as point C in FIG. 6b ③, and in this case, point C is the starting point of the second stage, that is, the starting point of the third execution step S620. The present disclosure does not limit the setting manner and specific position of the second preset position.

In step S620 (third execution step), the cleaning robot is controlled to run along the third combined path. The third combined path is a path formed by connecting P S-shaped third paths end to end, where P is a positive integer greater than 1; an ending point of the third combined path is an ending point of the P-th third path; and the ending point of the third combined path is a starting point of the fourth combined path.

In the embodiment, P is the number of third paths constituting the third combined path, and P may be preset, for example, P is preset to 3. The starting point and the ending point of the third combined path are the starting point of the first third path and the ending point of the Pth third path respectively, the initial direction of the third combined path is the above third initial direction L3 described above (since the third initial directions of all the third paths in the third combined path are the same, the initial direction of the third combined path is both the third initial direction of the first third path and the third initial direction of each of the third paths in it), the starting point of the first third path is the position where the cleaning robot is located after executing the above adjusting step S610, that is, the starting point of the second stage; the next third path takes the ending point of the previous third path as the starting point (therefore, the third combined path is referred to as a path formed by connecting the P S-shaped third paths end to end). The third combined path is shown by a curve of a bold solid line on the right side in FIG. 6b ④. According to the three similar methods of the above embodiments, the cleaning robot runs from the starting point Z1 of the second stage to the point Z2 along the S-shaped curve of the third path to complete the first third path (in this case, P = 1); then continues to run to the point Z3 along the S-shaped curve of the third path with the ending point Z2 of the first third path as the starting point to complete the second third path (in this case, P = 2); then continues to run to the point Z4 along the S-shaped curve of the third path with the ending point Z3 of the second third path as the starting point to complete the third of the third paths (in this case, P = 3). In this case, it is determined that P = 3, and the preset number of times of the third path has been reached, then the third execution step S620 is executed, and in this case, the cleaning robot is located at the ending point Z4 of the third third path, that is, the ending point of the third combined path.

In step S630 (fourth execution step), the cleaning robot is controlled to run along the fourth combined path. The fourth combined path and the third combined path are symmetrical, and a symmetrical manner of the fourth combined path and the third combined path is similar to the symmetrical manner of the fourth path and the third path in above Implementation 3, and details are not described herein again. The fourth combined path is a path formed by connecting P S-shaped fourth paths end to end; the starting point of the fourth combined path is the starting point of the first fourth path, and the ending point of the fourth combined path is the ending point of the Pth of the fourth paths, which is also the same as the starting point of the third combined path. Therefore, on the premise that the third combined path has been determined, the fourth combined path is easily determined. Therefore, a number of fourth paths forming the fourth combined path is the same as a number of third paths constituting the third combined path, and both are P. A starting point of the first fourth path is an ending point of the third combined path (that is, an ending point of the last third path, that is, an ending point of the Pth of the third paths), and the next fourth path takes an ending point of a previous fourth path as a starting point (therefore, the fourth combined path is referred to as a path formed by combining P S-shaped fourth paths end to end).

Exemplarily, the fourth combined path is as shown by the curve of the bold solid line on the right side in FIG. 6b ⑤, and the first fourth path runs to point Z3 along the solid S-shaped curve toward the downward arrow direction L4 (the direction L4 is the same as the third initial direction L3) with point Z4 as the starting point, the first fourth path is completed (in this case, P = 1); then the cleaning robot runs to point Z2 along the solid S-shaped curve toward the downward arrow direction with the ending point Z3 of the first fourth path as the starting point, completes the second fourth path (in this case, P = 2); then the cleaning robot runs to point Z1 along the solid S-shaped curve toward the downward arrow direction with the ending point Z2 of the second fourth path as the starting point, completes the third fourth path (in this case, P = 3), returns to the starting point of the third combined path, i.e., the starting point Z1 of the second stage. After the above fourth execution step S630 is completed, that is, after the second stage is completed, exemplarily, the cleaning robot may end the specific mode. Exemplarily, as shown in FIG. 6b ⑥, a specific mode is switched to a normal mode (for example, a boustrophedon route) to run. Of course, the cleaning robot may execute the same specific mode again, or execute the specific mode again after changing the direction; the cleaning robot may also enter other modes according to instructions or programs after exiting the specific mode, such as navigation mode, obstacle avoidance mode, along-edge mode, etc.

According to the embodiment, during the running of the cleaning robot, when the starting condition is satisfied, the cleaning robot runs in a specific mode (a double-S combination mode), that is, the cleaning robot first runs, from the starting point of the first stage to the ending point, along the first combined path formed by combining the M S-shaped first paths end to end, and then runs, from the ending point to the starting point of the original first stage, along the second combined path formed by combining the M S-shaped second paths end to end. Then, it is determined that the cleaning robot takes the second preset position as the starting point of the second stage, and the running direction of the cleaning robot is turned to the third initial direction. Then, the cleaning robot runs, from the starting point of the second stage to the ending point, along the third combined path formed by combining the P S-shaped third paths end to end, and then runs, from the ending point to the starting point of the second stage, along the fourth combined path formed by combining the P S-shaped fourth paths end to end. Therefore, some paths in the running path of the cleaning robot are overlapped, some paths are relatively close, considering that the cleaning robot has a certain work width, it can also have the effect of repeated cleaning for relatively close paths, in this way, compared with the problem in the prior art that the same cleaning on the entire work surface results in the inability to perform more targetedly cleaning on the dirty area and the insufficient cleaning degree of the dirty area, the cleaning robot of the embodiment cleans one dirty position multiple times, and the cleaning area in a specific mode can be expanded by adjusting the preset M value and P value, so that the dirty area can be cleaned more targetedly and effectively.

In an implementation, as shown in FIG. 6a, after the fourth execution step S630, the above control method may further comprise a determination step S640, in which it is determined whether the degree of dirtiness of the current work surface meets the preset dirtiness condition, and if it is determined that the degree of dirtiness of the current work surface meets the preset dirtiness condition, the control method returns to continue to execute the first execution step S410 or the third execution step S620, so as to detect the cleaning effect in the specific mode in real time, and when the current work surface is still dirty, the first stage or the second stage of cleaning in the specific mode may be repeatedly executed, thereby improving the cleaning effect of the cleaning robot and the user experience. The determining step S640 is similar to the determining step S125 in Implementation 2 and the determining step S510 in Implementation 5, and details are not described herein again.

It should be noted that any combination of the above each embodiment and various implementations under each embodiment also falls within the protection scope of the present disclosure.

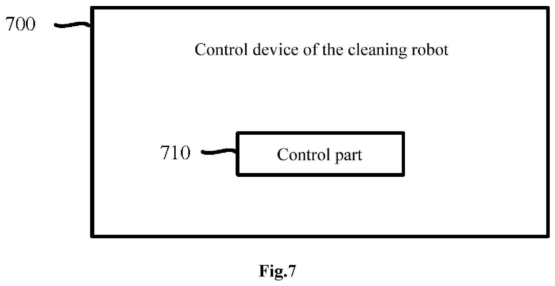

FIG. 7 shows a block diagram of a control device of a cleaning robot for cleaning a work area according to an exemplary embodiment. Referring to FIG. 7, the control device 700 may comprise a control part 710. The control part 710 is configured to control the cleaning robot to run in a specific mode when a starting condition is satisfied, wherein the control part 710 is configured to execute the following steps: an initial step, determining that the cleaning robot takes a first preset position as a starting point of a first stage, controlling the cleaning robot to be located at the starting point of the first stage, and turning a running direction of the cleaning robot to a first initial direction; a first execution step, controlling the cleaning robot to run along a first path; and a second execution step, controlling the cleaning robot to run along a second path, the first stage comprises the first execution step and the second execution step; wherein the second path is symmetrical to the first path, the first path is an S-shaped curve, and the first initial direction of the first path is perpendicular to an initial running direction of the cleaning robot; and the second path is an S-shaped curve with an ending point of the first path as a starting point and the starting point of the first path as an ending point.

In a possible implementation, the control part 710 is further configured to execute the following steps after the first execution step is executed: determining step, determining whether the degree of dirtiness of the current work surface meets a preset dirtiness condition, and if it is determined that the degree of dirtiness of the current work surface meets the preset dirtiness condition, continuing to execute the first execution step; or if it is determined that the degree of dirtiness of the current work surface does not meet the preset dirtiness condition, continuously executing N second execution steps, where N is a total number of times of executions for controlling the cleaning robot to run along the first path, and N is a positive integer greater than 1.

In a possible implementation, the control part 710 is further configured to execute the following steps after the first stage is executed: an adjusting step, determining that the cleaning robot takes a second preset position as a starting point of a second stage, and turning a running direction of the cleaning robot to a third initial direction; a third execution step, controlling the cleaning robot to run along a third path; and a fourth execution step, controlling the cleaning robot to run along a fourth path, where the second stage comprises the third execution step and the fourth execution step, the third initial direction is different from the first initial direction, the third path is an S-shaped curve, the fourth path is an S-shaped curve symmetrical to the third path, and the fourth path takes an ending point of the third path as a starting point and a starting point of the third path as an ending point.

In a possible implementation, the control part 710 is further configured to execute a determining step after the fourth execution step is executed, determine whether the degree of dirtiness of the current work surface meets the preset dirtiness condition, and if it is determined that the degree of dirtiness of the current work surface meets the preset dirtiness condition, return to continue to execute the first execution step or the third execution step.

Alternatively, the control part 710 is configured to control the cleaning robot to run in a specific mode when a starting condition is satisfied, wherein the control part 710 is configured to execute the following steps: an initial step, determining that the cleaning robot takes a first preset position as a starting point of a first stage, controlling the cleaning robot to be located at the starting point of the first stage, and turning the running direction of the cleaning robot to a first initial direction; a first execution step, controlling the cleaning robot to run along a first combined path; and a second execution step, controlling the cleaning robot to run along a second combined path, the first stage comprises the first execution step and the second execution step; wherein the first combined path is a path formed by connecting M S-shaped first paths end to end; the first initial direction of the first path is perpendicular to the initial running direction of the cleaning robot; M is a positive integer greater than 1; an ending point of the first combined path is an ending point of an M-th first path; the second combined path is symmetrical with the first combined path; the second combined path is a path formed by connecting M S-shaped second paths end to end; a starting point of the second combined path is a starting point of a first second path and is the same as the ending point of the first combined path, and an ending point of the second combined path is an ending point of an M-th second path and is the same as the starting point of the first combined path.

In a possible implementation, the control part 710 is further configured to execute a determining step after the second execution step is executed, determine whether the degree of dirtiness of the current work surface meets the preset dirtiness condition, and if it is determined that the degree of dirtiness of the current work surface meets the preset dirtiness condition, return to continue to execute the first execution step.

In a possible implementation, the control part 710 is further configured to execute the following steps after the first stage is executed: an adjusting step, determining that the cleaning robot takes a second preset position as a starting point of a second stage, and turning a running direction of the cleaning robot to a third initial direction; a third execution step, controlling the cleaning robot to run along a third combined path; and a fourth execution step, controlling the cleaning robot to run along a fourth combined path, the second stage comprises the third execution step and the fourth execution step; the third initial direction is different from the first initial direction, the third combined path is a path formed by connecting P S-shaped third paths end to end, and P is a positive integer greater than 1; an ending point of the third combined path is an ending point of a Pth third path and is also a starting point of the fourth combined path; the fourth combined path is symmetrical with the third combined path; the fourth combined path is a path formed by connecting P S-shaped fourth paths end to end; a starting point of the fourth combined path is a starting point of a first fourth path, and an ending point of the fourth combined path is an ending point of a Pth fourth path and is also the same as the starting point of the third combined path.

In a possible implementation, the control part 710 is further configured to execute a determining step after the fourth execution step is executed, determine whether the degree of dirtiness of the current work surface meets the preset dirtiness condition, and if it is determined that the degree of dirtiness of the current work surface meets the preset dirtiness condition, return to continue the first execution step or the third execution step.

In a possible implementation, the first path comprises: running along a straight line toward the first initial direction for a first predetermined distance; running along a first arc whose radius is a second predetermined distance toward a first rotation direction, the running distance being a half circumference of a first circle where the first arc is located; running along a straight line for a third predetermined distance; running along a second arc whose radius is a fourth predetermined distance toward the second rotation direction, the running distance being a half circumference of a second circle where the second arc is located; running to an ending point of the first path along a straight line toward the first initial direction for a fifth predetermined distance.

In a possible implementation, the first path comprises: running along a straight line toward the first initial direction for a first predetermined distance; running along a first arc whose radius is a second predetermined distance toward a first rotation direction, and adjusting the direction to a second initial direction, wherein the second initial direction is opposite to the first initial direction, and the first arc is smaller than a circumference of a first circle where the first arc is located; running along a straight line for a third predetermined distance; running along a second arc whose radius is a fourth predetermined distance toward a second rotation direction, and adjusting the direction to the first initial direction, wherein the second arc is smaller than a circumference of a second circle where the second arc is located; running to an ending point of the first path along a straight line toward the first initial direction for a fifth predetermined distance.

In a possible implementation, the first path comprises: running along a straight line toward the first initial direction for a first predetermined distance; rotating by a right angle in situ toward a first rotation direction to a first steering direction; running along a straight line for a second predetermined distance; rotating by a right angle in situ toward the first rotation direction to a second initial direction; running along a straight line for a third predetermined distance; rotating by a right angle in situ toward a second rotation direction to the first steering direction; running along a straight line for a fourth predetermined distance; rotating by a right angle in situ toward the second rotation direction to the first initial direction; running along a straight line for a fifth predetermined distance to an ending point of the first path.

In a possible implementation, the third path comprises: running along a straight line toward the third initial direction for a sixth predetermined distance; running along a third arc whose radius is a seventh predetermined distance toward a third rotation direction, the running distance being a half circumference of a third circle where the third arc is located; running along a straight line for an eighth predetermined distance; running along a fourth arc whose radius is a ninth predetermined distance toward a fourth rotation direction, the running distance being a half circumference of a fourth circle where the fourth arc is located; running to an ending point of the third path along a straight line toward the third initial direction for a tenth predetermined distance.

In a possible implementation, the third path comprises: running along a straight line toward the third initial direction for a sixth predetermined distance; running along a third arc whose radius is a seventh predetermined distance toward a third rotation direction, and adjusting the direction to a fourth initial direction, wherein the fourth initial direction is opposite to the third initial direction, and the third arc is smaller than a circumference of a third circle where the third arc is located; running along a straight line for an eighth predetermined distance; running along a fourth arc whose radius is a ninth predetermined distance toward a fourth rotation direction, and adjusting the direction to the third initial direction, wherein the fourth arc is smaller than a circumference of a fourth circle where the fourth arc is located; running to an ending point of the third path along a straight line toward the third initial direction for a tenth predetermined distance.

In a possible implementation, the first preset position is a position of a dirty area in the work area, the initial step comprises: a determining step, determining that the cleaning robot takes the position of the dirty area as a starting point of the first stage; and a moving step, controlling the cleaning robot to run from a first position to a position of the dirty area, and turning a running direction of the cleaning robot to the first initial direction, wherein the first position is an initial position at which the cleaning robot is located when running in the specific mode.

In a possible implementation, the first preset position is an initial position at which the cleaning robot is located when running in the specific mode.
In a possible implementation, the starting condition comprises: detecting that a degree of dirtiness of a current work surface meets a preset dirtiness condition, or detecting a dirty area in the work area.
Regarding the device in the above embodiments, the specific manner in which each part executes operations has been described in detail in the embodiments related to the method, and will not be described in detail here.

The descriptions of each embodiment of the present disclosure have been described for purposes of illustration, but are not intended to be exhaustive or limited to each embodiment disclosed. Many modifications and variations will be apparent to those of ordinary skill in the art without departing from the scope and spirit of the described each embodiment. The terminology used herein was chosen to best explain the principles of each embodiment, the practical application or technical improvement over technologies in the marketplace, or to enable others of ordinary skill in the art to understand each embodiment disclosed herein.

## Claims

1. A control method for a cleaning robot, wherein the cleaning robot is configured to clean a work area, and the control method comprises:
controlling the cleaning robot to run in a specific mode based on satisfaction of a starting condition,
wherein controlling the cleaning robot to run in the specific mode comprises:
an initial step, determining that the cleaning robot takes a first preset position as a starting point of a first stage, controlling the cleaning robot to be located at the starting point of the first stage, and turning a running direction of the cleaning robot to a first initial direction;
a first execution step, controlling the cleaning robot to run along a first path;
a second execution step, controlling the cleaning robot to run along a second path,
the first stage comprises the first execution step and the second execution step;
wherein the second path is symmetrical with the first path; the first path is an S-shaped curve, and the first initial direction of the first path is perpendicular to an initial running direction of the cleaning robot; and the second path is an S-shaped curve with an ending point of the first path as a starting point and a starting point of the first path as an ending point.

2. The control method according to claim 1, wherein after the first execution step, further comprising:
a determination step, determining whether a degree of dirtiness of a current work surface meets a preset dirtiness condition, based on a determination that the degree of dirtiness of the current work surface meets the preset dirtiness condition, continuing to execute the first execution step, and based on a determination that the degree of dirtiness of the current work surface does not meet the preset dirtiness condition, continuously executing N of the second execution steps;
wherein N is a total number of the first execution step executed, and N is a positive integer greater than 1.

3. The control method according to claim 1, after the first stage, further comprising:
an adjusting step, determining that the cleaning robot takes a second preset position as a starting point of a second stage, and turning a running direction of the cleaning robot to a third initial direction;
a third execution step, controlling the cleaning robot to run along a third path;
a fourth execution step, controlling the cleaning robot to run along a fourth path,
the second stage comprises the third execution step and the fourth execution step;
wherein the third initial direction is different from the first initial direction; the third path is an S-shaped curve; the fourth path is an S-shaped curve symmetrical to the third path, and the fourth path takes an ending point of the third path as a starting point and a starting point of the third path as an ending point.

4. A control method for a cleaning robot, wherein the cleaning robot is configured to clean a work area, and the control method comprises:
controlling the cleaning robot to run in a specific mode based on satisfaction of a starting condition,
wherein controlling the cleaning robot to run in the specific mode comprises:
an initial step, determining that the cleaning robot takes a first preset position as a starting point of a first stage, controlling the cleaning robot to be located at the starting point of the first stage, and turning a running direction of the cleaning robot to a first initial direction;
a first execution step, controlling the cleaning robot to run along a first combined path;
a second execution step, controlling the cleaning robot to run along a second combined path,
the first stage comprises the first execution step and the second execution step;
wherein the first combined path is a path formed by connecting M S-shaped first paths end to end; the first initial direction of the first path is perpendicular to an initial running direction of the cleaning robot; M is a positive integer greater than 1; an ending point of the first combined path is an ending point of an M-th first path;
the second combined path is symmetrical with the first combined path; the second combined path is a path formed by connecting M S-shaped second paths end to end; a starting point of the second combined path is a starting point of a first of the second paths and is same as the ending point of the first combined path, and an ending point of the second combined path is an ending point of an M-th second path and is also same as a starting point of the first combined path.

5. The control method according to claim 4, after the second execution step, further comprising:
a determining step, determining whether a degree of dirtiness of the current work surface meets a preset dirtiness condition, and based on a determination that the degree of dirtiness of the current work surface meets the preset dirtiness condition, returning to continue to execute the first execution step.

6. The control method according to claim 4, after the first stage, further comprising:
an adjusting step, determining that the cleaning robot takes a second preset position as a starting point of a second stage, and turning a running direction of the cleaning robot to a third initial direction;
a third execution step, controlling the cleaning robot to run along a third combined path;
a fourth execution step, controlling the cleaning robot to run along a fourth combined path,
the second stage comprises the third execution step and the fourth execution step;
wherein the third initial direction is different from the first initial direction,
the third combined path is a path formed by connecting P S-shaped third paths end to end, P is a positive integer greater than 1; an ending point of the third combined path is an ending point of a Pth third path, and is also a starting point of the fourth combined path;
the fourth combined path is symmetrical with the third combined path; the fourth combined path is a path formed by connecting P S-shaped fourth paths end to end; a starting point of the fourth combined path is a starting point of a first of the fourth paths, and an ending point of the fourth combined path is an ending point of a Pth fourth path, and is also same as a starting point of the third combined path.

7. The control method according to claim 3 or 6, wherein after the fourth execution step, the method further comprises:
a determining step, determining whether a degree of dirtiness of the current work surface meets a preset dirtiness condition, and based on a determination that the degree of dirtiness of the current work surface meets the preset dirtiness condition, returning to continue to execute the first execution step or the third execution step.

8. The control method according to any one of claims 1 to 6, wherein the first path comprises:
running along a straight line toward the first initial direction for a first predetermined distance;
running along a first arc whose radius is a second predetermined distance toward a first rotation direction, a running distance of which being a half circumference of a first circle where the first arc is located;
running along a straight line for a third predetermined distance;
running along a second arc whose radius is a fourth predetermined distance toward the second rotation direction, a running distance of which being a half circumference of a second circle where the second arc is located;
running to the ending point of the first path along a straight line toward the first initial direction for a fifth predetermined distance.

9. The control method according to any one of claims 1 to 6, wherein the first path comprises:
running along a straight line toward the first initial direction for a first predetermined distance;
running along a first arc whose radius is a second predetermined distance toward a first rotation direction, and adjusting the direction to a second initial direction, wherein the second initial direction is opposite to the first initial direction, and the first arc is smaller than a circumference of a first circle where the first arc is located;
running along a straight line for a third predetermined distance;
running along a second arc whose radius is a fourth predetermined distance toward a second rotation direction, and adjusting the direction to the first initial direction, wherein the second arc is smaller than a circumference of a second circle where the second arc is located;
running to the ending point of the first path along a straight line toward the first initial direction for a fifth predetermined distance.

10. The control method according to any one of claims 1 to 6, wherein the first path comprises:
running along a straight line toward the first initial direction for a first predetermined distance;
rotating by a right angle in situ toward a first rotation direction to a first steering direction; running along a straight line for a second predetermined distance;
rotating by a right angle in situ toward the first rotation direction to a second initial direction; running along a straight line for a third predetermined distance;
rotating by a right angle in situ toward a second rotation direction to the first steering direction; running along a straight line for a fourth predetermined distance;
rotating by a right angle in situ toward the second rotation direction to the first initial direction; running along a straight line for a fifth predetermined distance to the ending point of the first path.

11. The control method according to claim 3 or 6, wherein the third path comprises:
running along a straight line toward the third initial direction for a sixth predetermined distance;
running along a third arc whose radius is a seventh predetermined distance toward a third rotation direction, a running distance of which being a half circumference of a third circle where the third arc is located;
running along a straight line for an eighth predetermined distance;
running along a fourth arc whose radius is a ninth predetermined distance toward a fourth rotation direction, a running distance of which being a half circumference of a fourth circle where the fourth arc is located;
running to an ending point of the third path along a straight line toward the third initial direction for a tenth predetermined distance.

12. The control method according to claim 3 or 6, wherein the third path comprises:
running along a straight line toward the third initial direction for a sixth predetermined distance;
running along a third arc whose radius is a seventh predetermined distance toward a third rotation direction, and adjusting the direction to a fourth initial direction, wherein the fourth initial direction is opposite to the third initial direction, and the third arc is smaller than a circumference of a third circle where the third arc is located;
running along a straight line for an eighth predetermined distance;
running along a fourth arc whose radius is a ninth predetermined distance toward a fourth rotation direction, and adjusting the direction to the third initial direction, wherein the fourth arc is smaller than a circumference of a fourth circle where the fourth arc is located;
running to the ending point of the third path along a straight line toward the third initial direction for a tenth predetermined distance.

13. The control method according to any one of claims 1 to 6, wherein the first preset position is a position of a dirty area in the work area,
the initial step comprises:
a determining step, determining that the cleaning robot takes the position of the dirty area as the starting point of the first stage; and
a moving step, controlling the cleaning robot to run from a first position to a position of the dirty area, and turning a running direction of the cleaning robot to the first initial direction, wherein the first position is an initial position at which the cleaning robot is located when running in the specific mode.

14. A control device for a cleaning robot, wherein the cleaning robot is configured to clean a work area, and the control device comprises:
a control part configured to control the cleaning robot to run in a specific mode when a starting condition is satisfied,
wherein the control part is configured to execute the following steps:
an initial step, determining that the cleaning robot takes a first preset position as a starting point of a first stage, controlling the cleaning robot to be located at the starting point of the first stage, and turning a running direction of the cleaning robot to a first initial direction;
a first execution step, controlling the cleaning robot to run along a first path;
a second execution step, controlling the cleaning robot to run along a second path,
the first stage comprises the first execution step and the second execution step;
wherein the second path is symmetrical with the first path, the first path is an S-shaped curve, and the first initial direction of the first path is perpendicular to an initial running direction of the cleaning robot; and the second path is an S-shaped curve with an ending point of the first path as a starting point and a starting point of the first path as an ending point.

15. A control device for a cleaning robot, wherein the cleaning robot is configured to clean a work area, and the control device comprises:
a control part configured to control the cleaning robot to run in a specific mode when a starting condition is satisfied,
wherein the control part is configured to execute the following steps:
an initial step, determining that the cleaning robot takes a first preset position as a starting point of a first stage, controlling the cleaning robot to be located at the starting point of the first stage, and turning a running direction of the cleaning robot to a first initial direction;
a first execution step, controlling the cleaning robot to run along a first combined path;
a second execution step, controlling the cleaning robot to run along a second combined path,
the first stage comprises the first execution step and the second execution step;
wherein the first combined path is a path formed by connecting M S-shaped first paths end to end; the first initial direction of the first path is perpendicular to an initial running direction of the cleaning robot; M is a positive integer greater than 1; an ending point of the first combined path is an ending point of an M-th first path;
the second combined path is symmetrical with the first combined path; the second combined path is a path formed by connecting M S-shaped second paths end to end; a starting point of the second combined path is a starting point of a first of the second paths and is same as the ending point of the first combined path, and an ending point of the second combined path is an ending point of an M-th second path and is also same as a starting point of the first combined path.

16. A control device for a cleaning robot, comprising:
a processor;
a memory for storing processor-executable instructions;
wherein the processor is configured to implement the control method according to any one of claims 1 to 13 when executing the instructions stored in the memory.

17. A cleaning robot, comprising:
a moving assembly configured to move the cleaning robot over a work surface in a work area;
the control device according to any one of claims 14 to 16.

18. A non-transitory computer-readable storage medium having computer program instructions stored thereon, wherein the computer program instructions, when executed by a processor, implement the control method according to any one of claims 1 to 13.
